# EUROPEAN PATENT APPLICATION

(11) **EP 4 539 376 A1**
(43) Date of publication of application: **16.04.2025**
(21) Application number: 23818780.1
(22) Date of filing: 14.03.2023
(51) Int. Cl.: H04L 5/00

(54) **BEAM INFORMATION DETERMINATION METHOD AND APPARATUS, AND COMMUNICATION DEVICE**

(30) Priority: 08.06.2022 CN 202210647805
(71) Applicant: Datang Mobile Communications Equipment Co., Ltd., Beijing 100085 (CN)
(72) Inventor: SONG, Lei, Beijing 100085 (CN); SU, Xin, Beijing 100085 (CN); ZHANG, Xin, Beijing 100085 (CN)
(74) Representative: dompatent von Kreisler Selting Werner - Partnerschaft von Patent- und Rechtsanwälten mbB
(86) International application number: PCT/CN2023/081441
(87) International publication number: WO 2023/236612

(57) **Abstract**

A method, a device and a communication device for determining beam information are provided in the present disclosure, which solves the problem that the beam indication method in the related technologies is difficult to apply to an RIS system or a relay system. The method includes: obtaining, by a terminal, multiple QCL parameter configurations of a reference signal; and determining, by the terminal, at least one target QCL parameter from the multiple QCL parameters of the reference signal based on a predefined rule or an indication from a network side device; the predefined rule or the indication from the network side device is determined based on an association relationship between QCL parameters of the reference signal and pieces of transmission information, and the transmission information includes at least one of a transmission time unit, a scheduled transmission, a transmission channel and a transmission signal.

## Description

### CROSS-REFERENCE TO RELATED APPLICATION

This application claims a priority to Chinese Patent Application No. 202210647805.X filed on June 08, 2022, which is incorporated in its entirety by reference herein.

### TECHNICAL FIELD

The present disclosure relates to the field of communication technologies, in particular to a method for determining beam information, a device for determining beam information, and a communication device for determining beam information.

### BACKGROUND

In a reconfigurable intelligent surface (Reconfigurable Intelligent Surface, RIS) system or a relay system, a same reference signal may have multiple pieces of beam information which are different (for example, the reference signal has different beam directions when transmitted by a network side and reflected by the RIS or forwarded by the relay), and the multiple pieces of beam information need to be known to the terminal so that the terminal can use appropriate filters to receive or transmit physical signals or physical channels. However, in the related technologies, the terminal is unable to distinguish different pieces of beam information of a same source reference signal. When the same reference signal is transmitted using different transmission paths in the RIS system or the relay system, the terminal can not select appropriate filters for transmitting or receiving for the different transmission paths. Therefore, the beam indication method in the related technologies can not be effectively applied to the RIS system or the relay system.

### SUMMARY

The present disclosure is to provide a method for determining beam information, a device for determining beam information, and a communication device for determining beam information, to solve the problem that the beam indication method in the related technologies is difficult to apply to an RIS system or a relay system.

In order to achieve the above object, the present disclosure provides a method for determining beam information, including:
obtaining, by a terminal, multiple quasi co-location (QCL) parameter configurations of a reference signal, where the QCL parameter configurations are used to configure multiple QCL parameters of the reference signal; and
determining, by the terminal, at least one target QCL parameter from the multiple QCL parameters of the reference signal based on a predefined rule or an indication from a network side device;
the predefined rule or the indication from the network side device is determined based on an association relationship between the QCL parameters of the reference signal and pieces of transmission information, and the transmission information includes at least one of a transmission time unit, a scheduled transmission, a transmission channel and a transmission signal.

Optionally, the determining, by the terminal, the at least one target QCL parameter from the multiple QCL parameters of the reference signal based on the predefined rule includes:
determining, by the terminal, the at least one target QCL parameter corresponding to at least one piece of target transmission information from the multiple QCL parameters of the reference signal based on a correspondence between the QCL parameters of the reference signal and the pieces of transmission information;
the target transmission information includes transmission information associated with a first transmission, the first transmission includes a transmission between the terminal and the network side device and/or a first node, and the first node is configured to perform transmission with the terminal and/or the network side device.

Optionally, the transmission time unit of the transmission information is determined based on a resource transmission pattern or a slot format configured by a network side.

Optionally, each QCL parameter of the reference signal corresponds to one piece of resource index information in a beam measurement report.

Optionally, the determining, by the terminal, the at least one target QCL parameter from the multiple QCL parameters of the reference signal based on the indication from the network side device includes:
determining, by the terminal, the at least one target QCL parameter from the multiple QCL parameters of the reference signal based on QCL parameter indication information from the network side device, where the QCL parameter indication information includes one or more QCL parameter indexes of one QCL parameter type, or includes QCL parameter indexes respectively corresponding to at least two QCL parameter types, and each QCL parameter index corresponds to one QCL parameter.

Optionally, the QCL parameter indication information is used to indicate QCL parameter information of at least one transmission configuration indicator (TCI) state of a codepoint.

Optionally, the method of the embodiments of the present disclosure further includes:
obtaining, by the terminal, the QCL parameter indication information through a TCI field or a QCL indication information field in downlink control information (DCI).

Optionally, the method of the embodiments of the present disclosure further includes:
obtaining, by the terminal, TCI indication information through a TCI field, where the TCI indication information is used to indicate a TCI state configured for the terminal and at least one QCL parameter index corresponding to the TCI state.

Optionally, the QCL parameter index is associated with resource index information in a beam measurement report.

Optionally, the resource index information satisfies at least one of:
different pieces of resource index information corresponds to different QCL parameters of the reference signal;
different pieces of resource index information corresponds to different transmission links of the reference signal; or,
different pieces of resource index information corresponds to different time units.

Optionally, the transmission link of the reference signal includes:
a transmission link between the terminal and the network side device;
a transmission link between the terminal and a first node, where the first node is configured to perform transmission with the terminal and/or the network side device; or
a transmission link among the terminal, the network side device and the first node.

Optionally, the method of the embodiments of the present disclosure further includes:
performing, by the terminal, beam measurement reporting in a predefined reporting manner based on measurement resources of the reference signal on at least two measurement time units;
the predefined reporting manner includes at least one of:
   reporting a beam measurement result corresponding to a first target measurement resource based on target values of multiple measurement resources of the reference signal on each measurement time unit, where the target values are obtained based on sums of values of target parameters corresponding to the multiple measurement resources, where the target parameter includes at least one of layer 1 reference signal received power (L1-RSRP) and layer 1 signal to interference plus noise ratio (L1-SINR), the target value corresponding to the first target measurement resource is in the top N positions of a target sorting result, where the target sorting result is obtained by sorting the target values of the multiple measurement resources on the measurement time units in an descending order;
   reporting a beam measurement result corresponding to a second target measurement resource, where a target parameter of the second target measurement resource on each measurement time unit is greater than a preset threshold; or,
   reporting a beam measurement result corresponding to a third target measurement resource, where the at least two measurement time units include at least one reference measurement time unit, and the third target measurement resource is a measurement resource corresponding to the reference measurement time unit.

Optionally, in the method of the embodiments of the present disclosure, the indication from the network side device further includes: first information;
the first information is used to indicate one of the following:
multiple groups of TCI states, where each group of TCI states corresponds to one transmission time unit or one hop of link; and
a first group of TCI states and an adjustment codebook corresponding to the first group of TCI states, where the adjustment codebook is used to determine a second group of TCI states based on the first group of TCI states.

The present disclosure further provides a method for determining beam information, including:
determining, by a network side device, multiple quasi co-location (QCL) parameter configurations of a reference signal, where the QCL parameter configurations are used to configure multiple QCL parameters of the reference signal; and
indicating, by the network side device, at least one target QCL parameter from the multiple QCL parameters, to the terminal;
the target QCL parameter indicated by the network side device is determined based on an association relationship between the QCL parameters of the reference signal and pieces of transmission information.

Optionally, the indicating by the network side device the at least one target QCL parameter from the multiple QCL parameters to the terminal includes:
indicating, by the network side device, the at least one target QCL parameter from the multiple QCL parameters, to the terminal through QCL parameter indication information;
the QCL parameter indication information includes one or more QCL parameter indexes of one QCL parameter type, or includes QCL parameter indexes respectively corresponding to at least two QCL parameter types, and each QCL parameter index corresponds to one QCL parameter.

Optionally, the QCL parameter indication information is used to indicate QCL parameter information of at least one transmission configuration indicator (TCI) state of a codepoint.

Optionally, the method of the embodiments of the present disclosure further includes:
transmitting, by the network side device, the QCL parameter indication information through a TCI field or a QCL indication information field in DCI.

Optionally, the method of the embodiments of the present disclosure further includes:
transmitting, by the network side device, TCI indication information through a TCI field, where the TCI indication information is used to indicate a TCI state configured for the terminal and at least one QCL parameter index corresponding to the TCI state.

Optionally, the QCL parameter index is associated with resource index information in a beam measurement report.

Optionally, the resource index information satisfies at least one of:
different pieces of resource index information corresponds to different QCL parameters of the reference signal;
different pieces of resource index information corresponds to different transmission links of the reference signal; or,
different pieces of resource index information corresponds to different time units.

Optionally, the transmission link of the reference signal includes:
a transmission link between the terminal and the network side device;
a transmission link between the terminal and a first node, where the first node is configured to perform transmission with the terminal and/or the network side device; or
a transmission link among the terminal, the network side device and the first node.

Optionally, the method of the embodiments of the present disclosure further includes:
transmitting first information by the network side device, where the first information is used to indicate one of:
multiple groups of TCI states, where each group of TCI states corresponds to one transmission time unit or one hop of link; and
a first group of TCI states and an adjustment codebook corresponding to the first group of TCI states, where the adjustment codebook is used to determine a second group of TCI states based on the first group of TCI states.

Optionally, the determining by the network side device the multiple quasi co-location (QCL) parameter configurations of the reference signal includes:
obtaining, by the network side device, beam measurement results of multiple measurement resources of the reference signal on at least two measurement time units; and
determining, by the network side device, the multiple QCL parameter configurations of the reference signal based on the beam measurement results, where the beam measurement result of each measurement time unit corresponds to one QCL parameter of the reference signal.

The embodiments of the present disclosure further provide a device for determining beam information, which is applied to a terminal, including: a memory, a transceiver, and a processor;
the memory is configured to store a computer program, the transceiver is configured to transmit and receive data under control of the processor, and the processor is configured to read the computer program in the memory to perform following operations:
obtaining, via the transceiver, multiple quasi co-location (QCL) parameter configurations of a reference signal, where the QCL parameter configurations are used to configure multiple QCL parameters of the reference signal; and
obtaining multiple quasi co-location (QCL) parameter configurations of a reference signal, where the QCL parameter configurations are used to configure multiple QCL parameters of the reference signal; and
the predefined rule or the indication from the network side device is determined based on an association relationship between the QCL parameters of the reference signal and pieces of transmission information, and the transmission information includes at least one of a transmission time unit, a scheduled transmission, a transmission channel and a transmission signal.

Optionally, the processor is configured to execute the program to further perform following step:
determining the at least one target QCL parameter corresponding to at least one piece of target transmission information from the multiple QCL parameters of the reference signal based on a correspondence between the QCL parameters of the reference signal and the pieces of transmission information;
the target transmission information includes transmission information associated with a first transmission, the first transmission includes a transmission between the terminal and the network side device and/or a first node, and the first node is configured to perform transmission with the terminal and/or the network side device.

Optionally, the transmission time unit of the transmission information is determined based on a resource transmission pattern or a slot format configured by a network side.

Optionally, the processor is configured to execute the program to further perform following step:
determining the at least one target QCL parameter from the multiple QCL parameters of the reference signal based on QCL parameter indication information from the network side device, where the QCL parameter indication information includes one or more QCL parameter indexes of one QCL parameter type, or includes QCL parameter indexes respectively corresponding to at least two QCL parameter types, and each QCL parameter index corresponds to one QCL parameter.

Optionally, the QCL parameter indication information is used to indicate QCL parameter information of at least one transmission configuration indicator (TCI) state of a codepoint.

The embodiments of the present disclosure further provide a device for determining beam information, which is applied to a network side device, including a memory, a transceiver, and a processor;
the memory is configured to store a computer program, the transceiver is configured to transmit and receive data under control of the processor, and the processor is configured to read the computer program in the memory to perform following operations:
determining multiple quasi co-location (QCL) parameter configurations of a reference signal, where the QCL parameter configurations are used to configure multiple QCL parameters of the reference signal; and
indicating at least one target QCL parameter from the multiple QCL parameters, to the terminal;
the target QCL parameter is determined based on an association relationship between the QCL parameters of the reference signal and pieces of transmission information, and the transmission information includes at least one of a transmission time unit, a scheduled transmission, a transmission channel and a transmission signal.

Optionally, the processor is configured to execute the program to further perform following step:
indicating the at least one target QCL parameter from the multiple QCL parameters, to the terminal via the transceiver through QCL parameter indication information;
the QCL parameter indication information includes one or more QCL parameter indexes of one QCL parameter type, or includes QCL parameter indexes respectively corresponding to at least two QCL parameter types, and each QCL parameter index corresponds to one QCL parameter.

Optionally, the QCL parameter indication information is used to indicate QCL parameter information of at least one transmission configuration indicator (TCI) state of a codepoint.

The embodiments of the present disclosure further provide a device for determining beam information, which is applied to a terminal, including:
a fifth obtaining unit, configured to obtain multiple quasi co-location (QCL) parameter configurations of a reference signal, where the QCL parameter configurations are used to configure multiple QCL parameters of the reference signal; and
a first determination unit, configured to determine at least one target QCL parameter from the multiple QCL parameters of the reference signal based on a predefined rule or an indication from a network side device;
the predefined rule or the indication from the network side device is determined based on an association relationship between the QCL parameters of the reference signal and pieces of transmission information, and the transmission information includes at least one of a transmission time unit, a scheduled transmission, a transmission channel and a transmission signal.

The embodiments of the present disclosure further provide a device for determining beam information, which is applied to a network side device, including:
a second determination unit, configured to determine multiple quasi co-location (QCL) parameter configurations of a reference signal, where the QCL parameter configurations are used to configure multiple QCL parameters of the reference signal; and
an indication unit, configured to indicate at least one target QCL parameter from the multiple QCL parameters to the terminal;
the target QCL parameter indicated by the network side device is determined based on an association relationship between the QCL parameters of the reference signal and pieces of transmission information.

Embodiments of the present disclosure further provide a processor readable storage medium, having program indications stored thereon,, and the program indications are used to cause a processor to perform the steps of the method for determining beam information as described above.

The above technical solutions in the present disclosure have at least the following beneficial effects.

In embodiments of the present disclosure, the terminal determines the at least one target QCL parameter from the multiple QCL parameters of the reference signal based on the predefined rule or the indication from the network side device, where the at least one target QCL parameter is associated with the time unit, the scheduled transmission, the transmission channel, or the transmission signal. In this way, the same reference signal (or source reference signal) may have different QCL parameters for different time units, transmissions, channels, or signals, thereby enabling the terminal to select corresponding QCL parameters for different transmission paths in an RIS system or a relay system, that is, the method for determining beam information in the above can be effectively applied to the RIS system or the relay system.

### BRIEF DESCRIPTION OF THE DRAWINGS

To better clarify technical solutions of embodiments of the present disclosure or in the related technologies, drawings used in descriptions of the embodiments or in the related technologies are briefly introduced hereinafter. Apparently, the described drawings merely illustrate some embodiments of the present disclosure. A person ordinary skilled in the art can obtain other drawings based on these drawings without any creative efforts.
FIG. 1 is a structural diagram of a network system to which the embodiments of the present disclosure may be applied;
FIG. 2 is a first flow chart of a method for determining beam information according to embodiments of the present disclosure;
FIG. 3 is a first schematic diagram of transmission corresponding to each time unit according to embodiments of the present disclosure;
FIG. 4 is a schematic diagram of beam indication according to embodiments of the present disclosure;
FIG. 5 is a second schematic diagram of transmission corresponding to each time unit according to embodiments of the present disclosure;
FIG. 6 is a third schematic diagram of transmission corresponding to each time unit according to embodiments of the present disclosure;
FIG. 7 is a fourth schematic diagram of transmission corresponding to each time unit according to embodiments of the present disclosure;
FIG. 8 is a fifth schematic diagram of transmission corresponding to each time unit according to embodiments of the present disclosure;
FIG. 9 is a second flow chart of a method for determining beam information according to embodiments of the present disclosure;
FIG. 10 is a first structural block diagram of a device for determining beam information according to embodiments of the present disclosure;
FIG. 11 is a second structural block diagram of a device for determining beam information according to embodiments of the present disclosure;
FIG. 12 is a first schematic diagram of modules of a device for determining beam information according to embodiments of the present disclosure; and
FIG. 13 is a second schematic diagram of modules of a device for determining beam information according to embodiments of the present disclosure.

### DETAILED DESCRIPTION

The technical solutions in the embodiments of the present application may be applied to various systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a time division synchronous code division multiple access (Time Division Synchronous Code Division Multiple Access, TD-SCDMA) system, a general packet radio service (general packet radio service, GPRS) system, a long term evolution (Long Term Evolution, LTE) system (including TD-LTE and FDD LTE), a long term evolution advanced (Long Term Evolution Advanced LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5G System, SGS/SGCore, 5GC), etc.

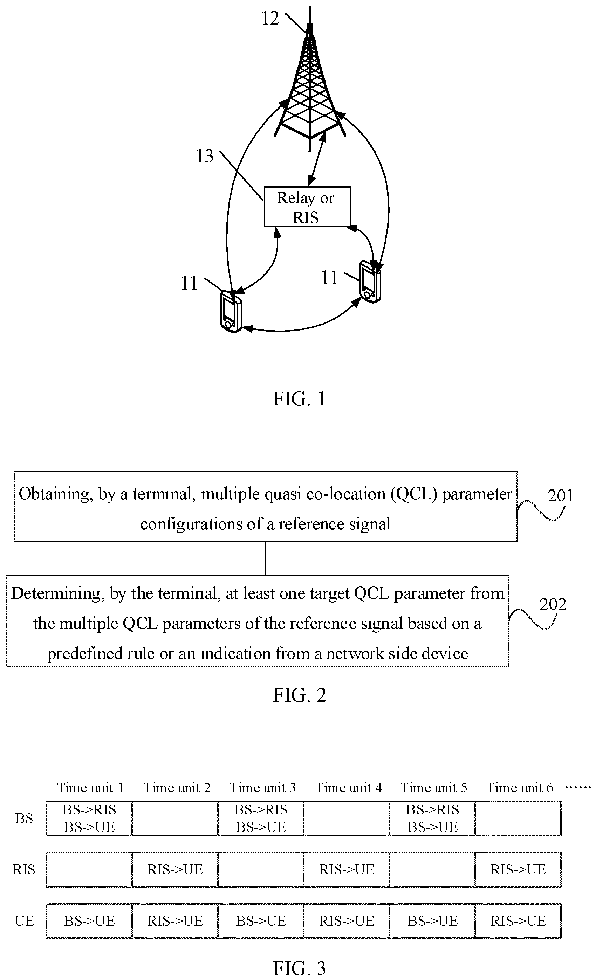

FIG. 1 is a block diagram of a radio communication system to which the embodiments of the present disclosure may be applied. The radio communication system includes a terminal 11, a network device 12, and a relay system (or an RIS system) 13. The terminal 11 may also be called a terminal device or a user equipment (User Equipment, UE). The terminal 11 may be a mobile phone, a tablet computer (Tablet Personal Computer), a laptop computer (Laptop Computer) or a notebook computer, a personal digital assistant (Personal Digital Assistant, PDA), a handheld computer, a netbook, an ultra-mobile personal computer (Ultra-Mobile Personal Computer, UMPC), a mobile Internet device (Mobile Internet Device, MID), a wearable device (Wearable Device) or a vehicle-mounted device (Vehicle User Equipment, VUE), a pedestrian user equipment (Pedestrian User Equipment, PUE) or other terminal side devices. The wearable device includes: a bracelet, a headphone, or glasses, etc. It should be noted that the specific type of the terminal 11 is not limited in the embodiments of the present disclosure. The network device 12 may be a base station or a core network, and the base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a B node, an evolved B node (eNB), a home B node, a home evolved B node, a wireless local area network (Wireless Local Area Network, WLAN) access point, a WiFi node, a transmitting receiving point (Transmitting Receiving Point, TRP) or some other suitable terms in the technical field. As long as the same technical effects can be achieved, the base station is not limited to specific technical vocabulary. It should be noted that in the embodiments of the present disclosure, the base station in the NR system is taken as an example only, and the specific type of the base station is not limited.

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

In order to enable those skilled in the art to better understand the embodiments of the present disclosure, the following description is first made.
1. Reconfigurable intelligent surface (Reconfigurable Intelligent Surface, RIS) is a candidate technology for 6G, which has the characteristics of low cost, low energy consumption, programmability and easy deployment. RIS is an electromagnetically active surface with communication capabilities, formed by a large-scale device array and an array control module. The array control module may be configured to control a response of each device unit to radio signals, such as amplitude, phase, frequency, and polarization. By superimposing the radio response signals of the device units on the large-scale device array, a specific beam propagation characteristic is formed on a macro scale, thereby forming a controllable intelligent radio environment.
   A relay system, which includes a smart repeater or a network-controlled repeater in the NR, or includes a relay system configured to forward network side signals in other systems, may provide forwarding services for a terminal at an edge of a network side coverage or outside the network side coverage, to improve system performance.
2. In NR systems, especially for high-frequency bands, beamforming technology is used to transmit physical channels or physical signals. During transmission, the network side notifies the terminal of a beam used by a physical channel or signal through a beam indication. Accordingly, the terminal may determine a corresponding transmission or reception filter to receive or transmit the corresponding physical channel or signal based on the indication from the network side.

In the physical layer protocol, a QCL parameter of type D is used to characterize a beam. A QCL parameter is used to indicate whether large-scale parameters between two reference signals are the same. The large-scale parameters include: Doppler shift, Doppler spread, average delay, delay spread and spatial reception filtering parameter. Four types of QCL parameters are defined:
"type A": {Doppler shift, Doppler spread, average delay, delay spread};
"type B": {Doppler shift, Doppler spread};
"type C": {Doppler shift, average delay};
"type D": {spatial reception filtering parameter}.

If two reference signals are quasi-co-located (QCL-ed) with respect to type D, it means that the beams used by the two reference signals are the same.

A quasi co-location (QCL) relationship between reference signals is indicated by a transmission configuration indicator (Transmission Configuration Indicator, TCI) state indication. Each TCI state configuration includes one or two QCL parameters. When two QCL parameters are indicated, the types of the two QCL parameters are different, for example, one QCL parameter is of Type A and the other QCL parameter is of Type D. Each QCL parameter configuration includes a reference signal, also called a source reference signal. For example, a TCI state configured for a PDSCH includes two QCL parameters, i.e., a channel state information reference signal (CSI-RS Resource Indicator, CSI-RS) 1 of Type A and a CSI-RS 2 of Type D, which means that a demodulation reference signal (Demodulation Reference Signal, DMRS) for the PDSCH has the same Doppler frequency shift, Doppler spread, average delay, and delay spread parameter as CSI-RS 1, and the same spatial reception filtering parameter (i.e., beam information) as CSI-RS 2.

Each physical channel or signal may have at most 2 TCI states, i.e., corresponding to beams of 2 links (e.g., 2 links from transmission points to the terminal).

Through the beam indication method in the NR, the terminal can know which source reference signal the beam of a physical channel or signal is the same as, that is, obtaining relative beam information but incapable of obtaining absolute beam information. For example, the source reference signal may be transmitted using a single beam or transmitted using multiple composite beams, and the terminal can not distinguish between them and will only consider them to be the same as the source reference signal. In the RIS system, the reference signal transmitted by the base station may be received by the terminal, and the same reference signal transmitted by the base station may also be received by the terminal after being forwarded by the RIS, where the two correspond to the same reference signal but correspond to different beams. According to related technologies, the terminal can not distinguish different pieces of beam information of the same source reference signal. Therefore, the beam indication mechanism in the related technologies can not be directly applied to the RIS system.

As shown in FIG. 2, embodiments of the present disclosure provide a method for determining beam information, which includes the following steps.

Step 201: obtaining, by a terminal, multiple quasi co-location (QCL) parameter configurations of a reference signal, where the QCL parameter configurations are used to configure multiple QCL parameters of the reference signal.

Optionally, the terminal may determine the multiple QCL parameter configurations of the reference signal based on beam measurement results of the reference signal on at least two measurement time units, where the beam measurement result of each measurement resource corresponds to one QCL parameter of the reference signal. For example, when performing beam measurement, the network side configures multiple measurement time units to transmit the same reference signal set, and the QCL parameters of each reference signal may be the same or different. When the QCL parameters are the same, it means that they are used for the terminal to perform reception beam scanning, that is, training reception filters of the terminal; when the QCL parameters are different, it means that they are used for the network side to perform transmission beam scanning, and accordingly, the terminal may report a reference signal index corresponding to an optimal beam and a corresponding measurement value. The present disclosure does not limit how to configure the QCL parameters. Accordingly, a reference signal is transmitted in multiple measurement time units, and the terminal can determine multiple QCL parameters of the reference signal. The QCL parameters will be further used as QCL parameters of a channel or signal in subsequent transmission, that is, the terminal obtains the multiple QCL parameter configurations of the reference signal based on the measurement reporting.

Optionally, the terminal may obtain the multiple QCL parameter configurations of the reference signal configured by the relay system or the RIS system. For example, the network side configures multiple QCL parameter configurations of one reference signal through RRC signaling and/or MAC-CE signaling, and each QCL parameter configuration may be quasi-co-located with other reference signal, or quasi-co-located with a QCL parameter of other reference signal. For example, CSI-RS 5 has a total of 3 QCL parameters, where the first QCL parameter and SSB 2 are quasi-co-located with respect to QCL-TypeA and QCL-TypeD, the second QCL parameter and CSI-RS 1 are quasi-co-located with respect to QCL-TypeD, and the third QCL parameter and SSB 8 are quasi-co-located with respect to QCL-TypeB. For another example, CSI-RS 11 has a total of 2 QCL parameters, where the first QCL parameter and a second QCL parameter of CSI-RS 5 are quasi-co-located, and the second QCL parameter and a first QCL parameter of SSB 7 are quasi-co-located. In the embodiments of the present disclosure, one QCL parameter configuration may include QCL parameter(s) of one type (such as QCL-TypeD parameter(s)) or may include a group of QCL parameters (such as QCL-TypeA and QCL-TypeD parameters), and the present disclosure does not impose any restrictions on this.

Step 202: determining, by the terminal, at least one target QCL parameter from the multiple QCL parameters of the reference signal based on a predefined rule or an indication from a network side device.

The predefined rule or the indication from the network side device is determined based on an association relationship between the QCL parameters of the reference signal and pieces of transmission information, and the transmission information includes at least one of a transmission time unit, a scheduled transmission, a transmission channel and a transmission signal.

Optionally, the time unit is a slot or a symbol, etc.

In addition, the QCL parameter in the above may also be described as a QCL characteristic, and the two are equivalent.

In embodiments of the present disclosure, the terminal determines the at least one target QCL parameter from the multiple QCL parameters of the reference signal based on the predefined rule or the indication from the network side device, where the at least one target QCL parameter is associated with the time unit, the scheduled transmission, the transmission channel, or the transmission signal. In this way, the same reference signal (or source reference signal) may have different QCL parameters for different time units, transmissions, channels, or signals, thereby enabling the terminal to select corresponding QCL parameters for different transmission paths in an RIS system or a relay system, that is, the method for determining beam information in the above can be effectively applied to the RIS system or the relay system.

Optionally, the determining, by the terminal, the at least one target QCL parameter from the multiple QCL parameters of the reference signal based on the predefined rule includes:
determining, by the terminal, the at least one target QCL parameter corresponding to at least one piece of target transmission information from the multiple QCL parameters of the reference signal based on a correspondence between the QCL parameters of the reference signal and the pieces of transmission information.

The target transmission information includes transmission information associated with a first transmission, the first transmission includes a transmission between the terminal and the network side device and/or a first node, and the first node is configured to perform transmission with the terminal and/or the network side device.

For example, the target time unit includes a time unit for signal transmission between the terminal and the network side device and/or the first node, and the first node is configured to perform transmission with the terminal and/or the network side device.

Optionally, the pieces of transmission information correspond to the QCL parameters one by one.

In the embodiments of the present disclosure, the predefined rule may be that: different pieces of transmission information (such as different time units) respectively correspond to different QCL characteristics of one source reference signal, and one piece of transmission information (such as one time unit) corresponds to one QCL characteristic of one source reference signal.

The transmission time unit (hereinafter referred to as time unit) is determined based on a resource transmission pattern or slot format configured by the network side. For example, the resource transmission pattern or slot format configured by the network side includes two time units, and a source reference signal has a total of 3 QCL characteristics with indexes of 0, 1, and 2, respectively; the first time unit may correspond to 1 and the second time unit may correspond to 0; other examples are not limited, and the quantity of time units and the quantity of QCL characteristics may be different. For another example, the transmission pattern or slot format includes 3 time units, or a cycle includes 3 time units, then the first time unit may corresponds to 0, the second time unit may correspond to 1, and the third time unit may correspond to 2; or, the first time unit corresponds to 1, the second time unit corresponds to 0, and the QCL characteristic of the third time unit is the superposition of the QCL characteristics corresponding to the first time unit and the second time unit. In addition, in the embodiments of the present disclosure, some of the time units may not have corresponding QCL characteristics or reception may not be performed in some of the time units.

In addition, in embodiments of the present disclosure, the quantity of QCL parameters of the same reference signal may be determined based on the quantity of time units included in the resource transmission pattern or slot format. For example, in a case that the resource transmission pattern or slot format configured by the network side includes two time units, each time unit may correspond to one QCL parameter of the same reference signal, that is, it is determined that the reference signal has two QCL parameters corresponding to different time units.

Optionally, each QCL parameter of the reference signal corresponds to one piece of resource index information in a beam measurement report. In embodiments of the present disclosure, the multiple QCL parameters of the same reference signal correspond to multiple measurements of the same reference signal in the beam measurement report, and the index of the QCL characteristic is the same as the resource setting index or resource set index or CSI resource index in the measurement report.

Optionally, the determining, by the terminal, the at least one target QCL parameter from the multiple QCL parameters of the reference signal based on the indication from the network side device includes:
determining, by the terminal, the at least one target QCL parameter from the multiple QCL parameters of the reference signal based on QCL parameter indication information from the network side device, where the QCL parameter indication information includes one or more QCL parameter indexes of one QCL parameter type, or includes QCL parameter indexes respectively corresponding to at least two QCL parameter types, and each QCL parameter index corresponds to one QCL parameter.

For example, the network side configures N (N is a positive integer) QCL parameter configurations of a reference signal through RRC signaling and/or MAC-CE signaling, and each QCL parameter configuration may be quasi-co-located with other reference signal, or quasi-co-located with a QCL parameter of other reference signal. The network side further indicates, through QCL parameter indication information, one or more QCL parameter indexes (such as 1, 2, 3, ..., N) for transmission of a PDSCH.

Optionally, the QCL parameter indication information is used to indicate QCL parameter information of at least one transmission configuration indicator (TCI) state of a codepoint.

For example, the QCL parameter indication information may indicate QCL parameter(s) corresponding to all TCI states of a codepoint, or may indicate QCL parameter(s) corresponding to one or more TCI states of a codepoint.

Optionally, the method of the embodiments of the present disclosure further includes:
obtaining, by the terminal, the QCL parameter indication information through a TCI field or a QCL indication information field in downlink control information (DCI).

Optionally, the method of the embodiments of the present disclosure further includes:
obtaining, by the terminal, TCI indication information through a TCI field, where the TCI indication information is used to indicate a TCI state configured for the terminal and at least one QCL parameter index corresponding to the TCI state.

Optionally, the TCI indication information is used to indicate a TCI state configured for the terminal and an effective QCL parameter index in at least one QCL parameter corresponding to the TCI state.

Optionally, the QCL parameter index is associated with resource index information in the beam measurement report.

In the present disclosure, multiple QCL parameters of the same reference signal correspond to multiple measurements of the same reference signal in the beam measurement result, and the index of the QCL characteristic is the same as the resource setting index or resource set index or CSI resource index in the beam measurement report.

Optionally, the resource index information satisfies at least one of:
different pieces of resource index information corresponds to different QCL parameters of the reference signal;
different pieces of resource index information corresponds to different transmission links of the reference signal; or,
different pieces of resource index information corresponds to different time units.

Optionally, the transmission link of the reference signal includes:
a transmission link between the terminal and the network side device;
a transmission link between the terminal and a first node, where the first node is configured to perform transmission with the terminal and/or the network side device; or
a transmission link among the terminal, the network side device and the first node.

In the embodiments of the present disclosure, the first node may be a node corresponding to an RIS system, or may be a node corresponding to a relay system, such as a smart repeater.

Optionally, the method of the embodiments of the present disclosure further includes:
performing, by the terminal, beam measurement reporting in a predefined reporting manner based on measurement resources of the reference signal on at least two measurement time units;
the predefined reporting manner includes at least one of:
   reporting a beam measurement result corresponding to a first target measurement resource based on target values of multiple measurement resources of the reference signal on each measurement time unit, where the target values are obtained based on sums of values of target parameters corresponding to the multiple measurement resources, where the target parameter includes at least one of layer 1 reference signal received power (L1-RSRP) and layer 1 signal to interference plus noise ratio (L1-SINR), the target value corresponding to the first target measurement resource is in the top N positions of a target sorting result, where the target sorting result is obtained by sorting the target values of the multiple measurement resources on the measurement time units in an descending order; for example, sorting is performed based on a sum of measurement results of 2 time units, and a CSI-RS with better quality is selected for reporting;
   reporting a beam measurement result corresponding to a second target measurement resource, where a target parameter of the second target measurement resource on each measurement time unit is greater than a preset threshold; or,
   reporting a beam measurement result corresponding to a third target measurement resource, where the at least two measurement time units include at least one reference measurement time unit, and the third target measurement resource is a measurement resource corresponding to the reference measurement time unit.

Optionally, the reference measurement time unit is any one or more measurement time units among the measurement time units. For example, reporting is performed based on the measurement result of the second measurement time unit in each cycle, in which case the network side places greater emphasis on the channel quality between RIS and UE; or reporting is performed based on the measurement result of the first time unit in each cycle, in which case the network side places greater emphasis on the channel quality between BS and UE.

Optionally, the terminal reports a CSI-RS with one measurement result being relatively good and another measurement result being not lower than a certain threshold.

In the embodiments of the present disclosure, the terminal reports, for each CSI resource setting or CSI resource set, K CRIs or SSBRIs and corresponding L1-RSRPs or L1-SINRs. Or, the terminal reports, for all CSI resource settings or CSI resource sets, a total of K CRIs or SSBRIs, where each CRI or SSBRI corresponds to N L1-RSRPs or N L1-SINRs, and N is the number of CSI resource settings or CSI resource sets, and K is the number of reported quantities.

It should be noted that the measurement time unit may be the same as or different from the transmission time unit in the above correspondence; in a case that they are different, the difference may lie in that units or granularities are different. In the measurement reporting manner, multiple measurement time units may be defined, and the same reference signal may be transmitted in multiple measurement time units, for example, same CSI-RS resources are configured for multiple CSI resource settings or multiple CSI resource sets.

In a first specific embodiment of the present disclosure, the terminal determines at least one target QCL parameter of the reference signal based on the predefined rule. Specifically: the terminal determines, according to the predefined rule, that a reference signal has different QCL-TypeD characteristics in different time units, based on the RIS transmission pattern or slot/symbol format configured by the network side.

For example, the transmission corresponding to each time unit in the RIS system is shown in FIG. 3.

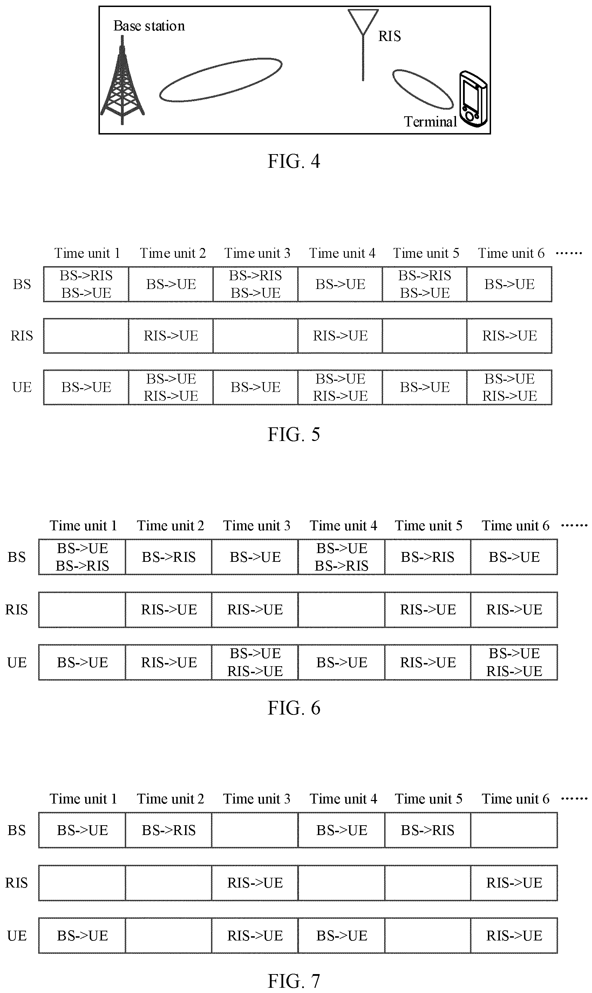

The transmission is performed with 2 time units as a cycle. In each cycle, the UE receives a signal transmitted by the network side in the first time unit and receives a signal forwarded by the RIS in the second time unit. In these two time units, the source signals received by the UE are the same, but the channel environments experienced by the source signals are different. The network side may perform beam indication in each cycle of time units, and in a beam cycle, a reference signal may have different QCL-Type D characteristics, for example, CSI-RS 1 transmitted by the network side has a direction pointing to the UE from the network side when it is received by the UE in time unit 1, and has a direction pointing to the UE from the RIS when it is received by the UE in time unit 2, as shown in FIG. 4.

Indication is performed through TCI states, each TCI state includes 2 QCL parameters, each QCL parameter includes a source reference signal, and according to the predefined rule, the terminal may determine that the source reference signal in each QCL parameter acts on 2 consecutive time units and may have different beams.

Optionally, the network side obtains different measurement results of the same source reference signal in the following manner:
the network side configures CSI resource settings for the terminal, which include CSI resource sets, and indicates, through a higher-layer parameter, the terminal to perform measurements in multiple time units. For example, the terminal is notified that a same CSI resource set will be transmitted in each of two measurement time units. The terminal reports jointly based on the measurement results of the two measurement time units. The criteria or the reported quantity adopted in the joint reporting may be at least one of the following:

First type: based on sums of target parameters of the multiple measurement resources of the reference signal on each measurement time unit, a beam measurement result corresponding to a first target measurement resource is reported, where the target parameter includes at least one of layer 1 reference signal received power L1-RSRP and layer 1 signal to interference plus noise ratio L1-SINR; for example, sorting is performed based on a sum of measurement results of 2 time units, and a CSI-RS with better quality is selected for reporting.

Second type: based on a relationship between target parameters of the multiple measurement resources of the reference signal on each measurement time unit and a preset threshold, a beam measurement result corresponding to a second target measurement resource is reported, where the target parameter of the second target measurement resource on each measurement time unit is greater than the preset threshold.

Third type: a beam measurement result corresponding to a third target measurement resource among the multiple measurement resources of the reference signal is reported, where the third target measurement resource is a measurement resource corresponding to a reference measurement time unit from the at least two measurement time units. For example, reporting is performed based on the measurement result of the second measurement time unit in each cycle, in which case the network side places greater emphasis on the channel quality between RIS and UE; or reporting is performed based on the measurement result of the first time unit in each cycle, in which case the network side places greater emphasis on the channel quality between BS and UE.

Optionally, the terminal reports a CSI-RS with one measurement result being relatively good and another measurement result being not lower than a certain threshold.

In a case that N CSI resource settings or N CSI resource sets are configured by the network side, the terminal reports separately for each CSI resource setting or CSI resource set, for example, it reports, for each CSI resource setting or CSI resource set, K CRIs or SSBRIs and corresponding L1-RSRPs or L1-SINRs. Or, the terminal reports, for all CSI resource settings or CSI resource sets, a total of K CRIs or SSBRIs, where each CRI or SSBRI corresponds to N L1-RSRPs or N L1-SINRs, and corresponds to different measurement results of the same reference signal for the multiple CSI resource settings or CSI resource sets. Since the multiple CSI resource settings or the multiple CSI resource sets are used for measurements for multiple measurement time units or multiple QCL characteristic, a same reference signal (CSI-RS resource or SSB resource) is usually transmitted by using different beams, or the parameter "repetition" is configured to "off", that is, the repeated transmission manner is not adopted.

After obtaining the measurement results of the terminal, the network side can use them for subsequent beam indication.

Optionally, the beam indication process and the beam measurement reporting process correspond to each other. In a case that N CSI resource settings or N CSI resource sets are configured in the measurement reporting to measure multiple QCL characteristics of a same reference signal, the reporting order in the beam measurement report of the terminal for the N CSI resource settings or N CSI resource sets corresponds to the N QCL characteristics, that is, the order or indexes of the QCL characteristics depend on the indexes of the corresponding CSI resource settings or CSI resource sets (or the relative index in the CSI resource setting or CSI resource set associated with a reporting setting), i.e., the QCL characteristics correspond to the multiple measurements of the same reference signal in the beam measurement reporting, and the index of the QCL characteristic is the same as the resource setting index or resource set index in the measurement reporting.

For another example, the transmission corresponding to each time unit in the RIS system may also be as shown in FIG. 5. In this case, a cycle of 2 time units is still adopted, and the UE can receive a signal transmitted by the network side in each time unit. In each cycle, the UE receives a signal transmitted by the network side in the first time unit, and receives a signal transmitted by the network side and forwarded by the RIS in the second time unit, i.e., being equivalent to a composite signal of two paths. The two links can be regarded as multipath. In this case, the beam indication method is similar to that in the transmission situation in FIG. 3, except that: when performing beam measurement reporting, the reference signal of the first time unit is transmitted by the network side and the reference signal of the second time unit is transmitted (forwarded) jointly by the network side and the RIS.

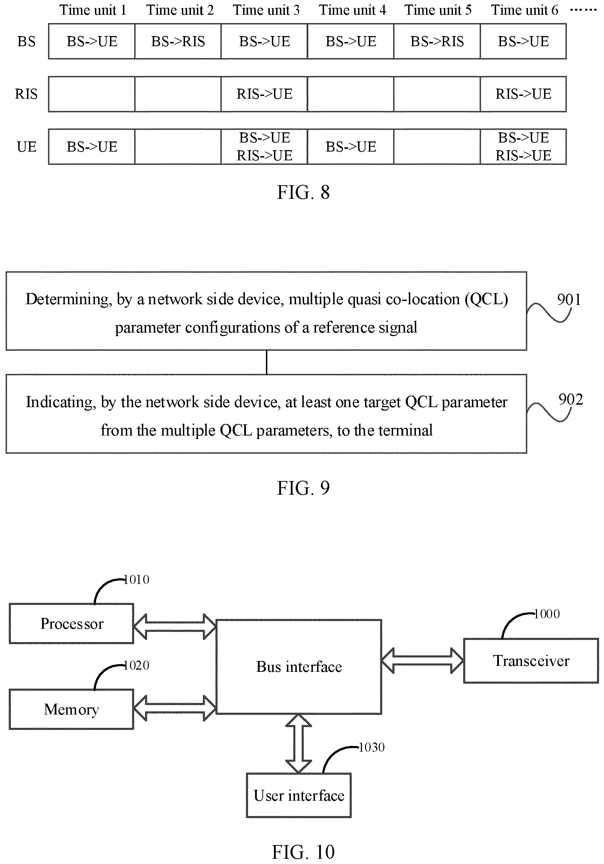

In one cycle, the quantity of time units may be 3 or more, which is not limited in the embodiments of the present disclosure. In this case, schematic diagrams of transmission corresponding to each time unit in the RIS system may also be shown in FIG. 6 to FIG. 8. It should be noted that the schematic diagrams only focus on the transmission and reception behavior on the terminal side, and signals received by the RIS on the network side are not fully drawn. In FIG. 6 to FIG. 8, the transmission cycle is 3 time units. In FIG. 6, for each of time unit 3 and time unit 6, the QCL characteristic for terminal reception is the sum of the QCL characteristics of the previous two time units. In FIG. 7 and FIG. 8, the terminal has no QCL characteristic or does not perform reception in some time units.

The terminal may determine the QCL characteristics based on the quantity of time units included in the transmission pattern or slot format, for example:
in a case that the transmission pattern or slot format includes 2 time units, or a cycle includes 2 time units, each time unit corresponds to a QCL characteristic;
in a case that the transmission pattern or slot format includes 3 time units, or a cycle includes 3 time units, the QCL characteristic of one time unit is the superposition of the QCL characteristics of the other two time units; for example, if one beam has a QCL characteristic of BS->UE and the other beam has a QCL characteristic of RIS->UE, the superimposed beam means that the terminal receives beams transmitted by the BS and the RIS at the same time; or some time units have no QCL characteristics or reception is not performed in some time units;
in addition, the time unit may be a symbol or a slot, etc.

The cycle may appear in a periodic form over a period of time. For example, in a case that the network side schedules the terminal to perform semi-persistent RIS transmission or semi-persistent scheduling (Semi-Persistent Scheduling, SPS) transmission, transmission may be performed in a periodic form after the activation command is received and before the deactivation command is received.

In a second specific embodiment of the present disclosure, the network side dynamically indicates at least one target QCL parameter of the same reference signal. The network side may dynamically indicate which QCL-Type D characteristic of the reference signal to use. When performing beam measurement reporting, the transmission behavior of each time unit is consistent with that in subsequent transmission. For example, when performing measurement reporting, the network side causes the terminal to measure the measurement results in scenarios where the CSI-RS is transmitted by the network side, forwarded by RIS, and jointly transmitted by the network side and the RIS; then, based on the scheduling situations the network side indicates to the terminal which QCL parameter is to be used to transmit the CSI-RS. For the same reference signal, each QCL parameter corresponds to one serial number or index; for example, the index of the QCL parameter of CSI-RS transmitted by the network side is 1, the index of the QCL parameter index of CSI-RS forwarded by the RIS is 2, and the index of the QCL parameter of CSI-RS jointly transmitted by the network side and the RIS is 3. This is equivalent to defining lower-level beam (or including other types of QCL parameters) information under QCL parameter.

This method is applicable to a case where the network side does not perform RIS transmission in a periodic manner, which can flexibly change the scheduling pattern of the network side and improve scheduling flexibility. For example, the network side may schedule, in several consecutive downlink time units, the terminal to receive signals from the RIS, receive information from the network side, not receive any signals, receive signals from the network side, and so on. A TCI state may be indicated separately for each time unit.

Specifically, in a first optional implementation: a QCL parameter indication is implemented in a TCI state field (multiple QCL characteristics of a source reference signal are indicated through QCL parameter indications):

For example, each codepoint in DCI is not only associated with TCI state(s), but also associated with the n-th QCL characteristic in QCL parameters. A case of 4 codepoints and downlink TCI state indication is taken as an example, as shown in Table 1:

**Table 1**

| Codepoint | TCI state combination | QCL parameter indication |
|---|---|---|
| 00 | TCI 3, TCI 8 | 0 |
| 01 | TCI 101 | 1 |
| 10 | TCI 57 | 1 |
| 11 | TCI 88, TCI 23 | 2 |

The QCL parameter indication is used to indicate which QCL characteristic in the QCL parameters of the TCI states is effective, where 0, 1 and 2 indicate the first, second and third QCL characteristics, respectively. The indication process meets the following characteristics:
the quantity of QCL parameter indications may be 1, 2, 3, 4 or more;
the QCL parameter indication may indicate multiple characteristics of a source reference signal corresponding to a certain QCL_TypeD parameter, or may be a characteristic indication of other types of QCL parameters, such as QCL_TypeA, QCL_TypeB, QCL_TypeC, etc., as shown in Table 2. For another example, in Table 2, when the codepoint is '01', the corresponding QCL_TypeD indication is 0,1, which indicates that the two indications are effective at the same time, e.g., indicating the terminal to receive a signal transmitted by the network side and receive a signal forwarded by the RIS at the same time.

**Table 2**

| Codepoint | TCI state combination | QCL_TypeA indication | QCL_TypeD indication |
|---|---|---|---|
| 00 | TCI 3, TCI 8 | 0 | 1 |
| 01 | TCI 101 | 1 | 0,1 |
| 10 | TCI 57 | 1 | 1 |
| 11 | TCI 88, TCI 23 | 2 | 2 |

In addition, in this implementation, each TCI state may correspond to a QCL parameter indication, or all TCI states may correspond to a same QCL parameter indication. Table 1 shows a case of corresponding to all TCI states (such as 2 TCI states in a TCI state combination), and Table 3 shows a case where each TCI state corresponds to a QCL indication. In Table 3, QCL parameter indication 1, QCL parameter indication 2 and QCL parameter indication 3 correspond to 3 TCI states of each codepoint respectively, and each QCL parameter indication corresponds to one TCI state. In a case that the quantity of TCI states of a codepoint is less than 3, for example, 1 or 2 TCI states, the 2nd/3rd QCL parameter indication or the 3rd QCL parameter indication is reserved (i.e., having no practical meaning). That is, the quantity of QCL parameter indications is determined by the maximum quantity of TCIs that a codepoint can indicate. For example, if there are 2 TCI states, then there are 2 QCL parameter indications, or, the quantity of QCL parameter indications is predefined in the protocol, for example, the quantity is 4, and the actual quantity used is determined by the quantity of TCIs indicated by the corresponding codepoint. If the codepoint indicates N TCI states, the first N QCL parameter indications are effective. For example, in Table 4, the quantity of QCL indications is predefined by the protocol (e.g., 4), and each of all codepoints in the current slot indicate no more than 3 TCI states, then QCL parameter indication 4 of each of all codepoints is reserved. In addition, each QCL parameter indication may include various types of QCL parameter indications, that is, as a combination of Table 2 and Table 3, which includes multiple QCL parameter indications and includes indications of each QCL type, as shown in Table 5. QCL indication 1 corresponds to the first TCI state of the codepoint, and QCL indication 2 corresponds to the second TCI state of the codepoint.

In a case that the TCI states of the uplink and the downlink are indicated separately, the TCI states of the uplink and the downlink may correspond to the QCL indications respectively.

**Table 3**

| Codepoint | TCI state combination | QCL parameter indication 1 | QCL parameter indication 2 | QCL parameter indication 3 |
|---|---|---|---|---|
| 00 | TCI 3, TCI 8, TCI 90 | 0 | 2 | 0 |
| 01 | TCI 101 | 1 | Reserved | Reserved |
| 10 | TCI 57 | 1 | Reserved | Reserved |
| 11 | TCI 88, TCI 23 | 2 | 0 | Reserved |

**Table 4**

| Codepoint | TCI state combination | QCL parameter indication 1 | QCL parameter indication 2 | QCL parameter indication 3 | QCL parameter indication 4 |
|---|---|---|---|---|---|
| 00 | TCI 3, TCI 8, TCI 90 | 0 | 2 | 0 | Reserved |
| 01 | TCI 101 | 1 | Reserved | Reserved | Reserved |
| 10 | TCI 57 | 1 | Reserved | Reserved | Reserved |
| 11 | TCI 88, TCI 23 | 2 | 0 | Reserved | Reserved |

**Table 5**

| Codepoint | TCI state combination | QCL parameter indication 1; QCL-TypeA | QCL parameter indication 1; QCL-TypeD | QCL parameter indication 2; QCL-TypeA | QCL parameter indication 2; QCL-TypeD |
|---|---|---|---|---|---|
| 00 | TCI 3, TCI 8 | 0 | 2 | 0 | 1 |
| 01 | TCI 101 | 1 | 1 | 1 | 1 |
| 10 | TCI 57 | 1 | 0 | 1 | 2 |
| 11 | TCI 88, TCI 23 | 2 | 0 | 2 | 2 |

In this implementation, the network side configures multiple QCL parameter configurations of a reference signal through RRC signaling and/or MAC-CE signaling, and each QCL parameter configuration may be quasi-co-located with other reference signal, or quasi-co-located with a QCL parameter of other reference signal. The QCL parameter(s) are configured jointly with the TCI state(s), for example:

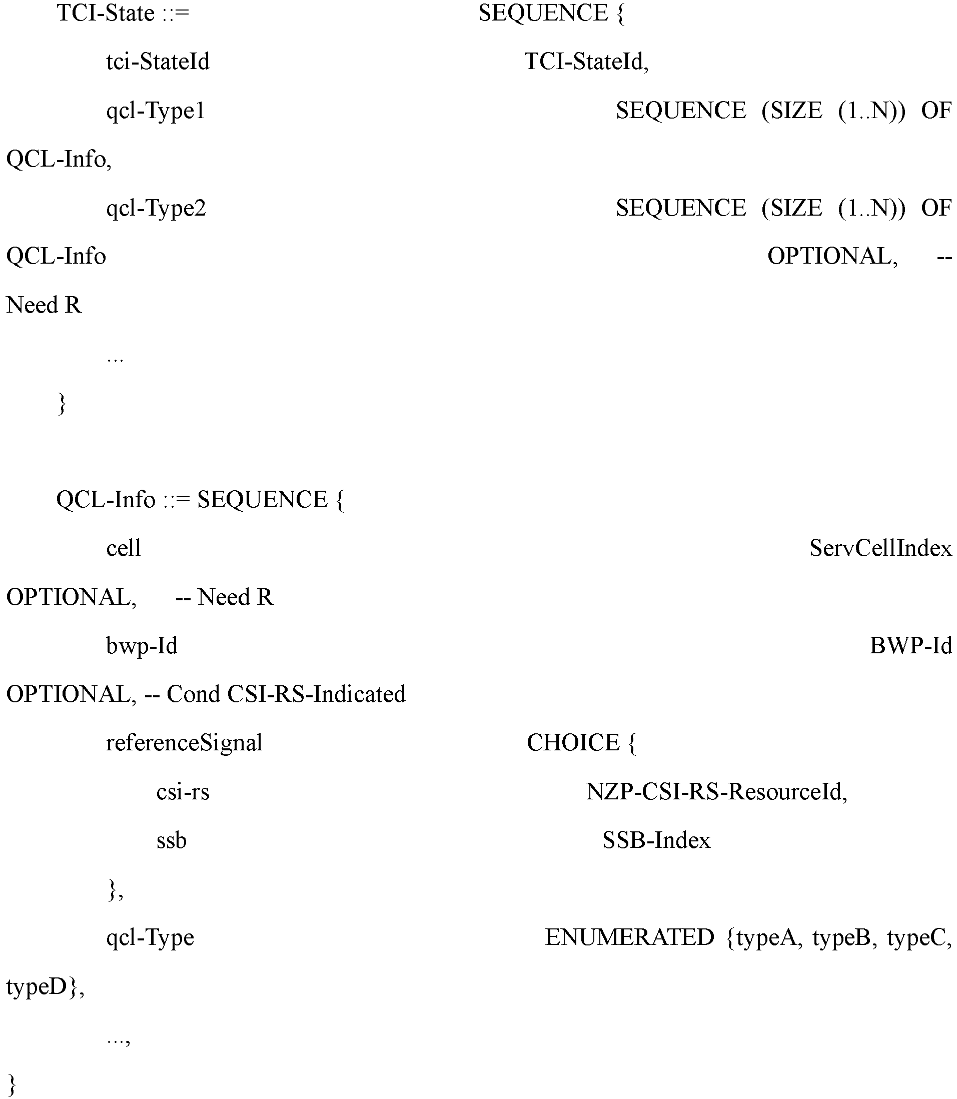

Each QCL type (qcl-Type1 or qcl-Type2) corresponds to multiple QCL-info. For example, each QCL type is configured with at most N QCL-infos, and in a case that DCI signaling is used to indicate QCL parameters, QCL parameter indexes are 0, 1, 2, ..., N-1.

Or, multiple QCL-infos are configured at a higher parameter level than the parameter TCI-State, for example, configured in the TCI state resource pool:

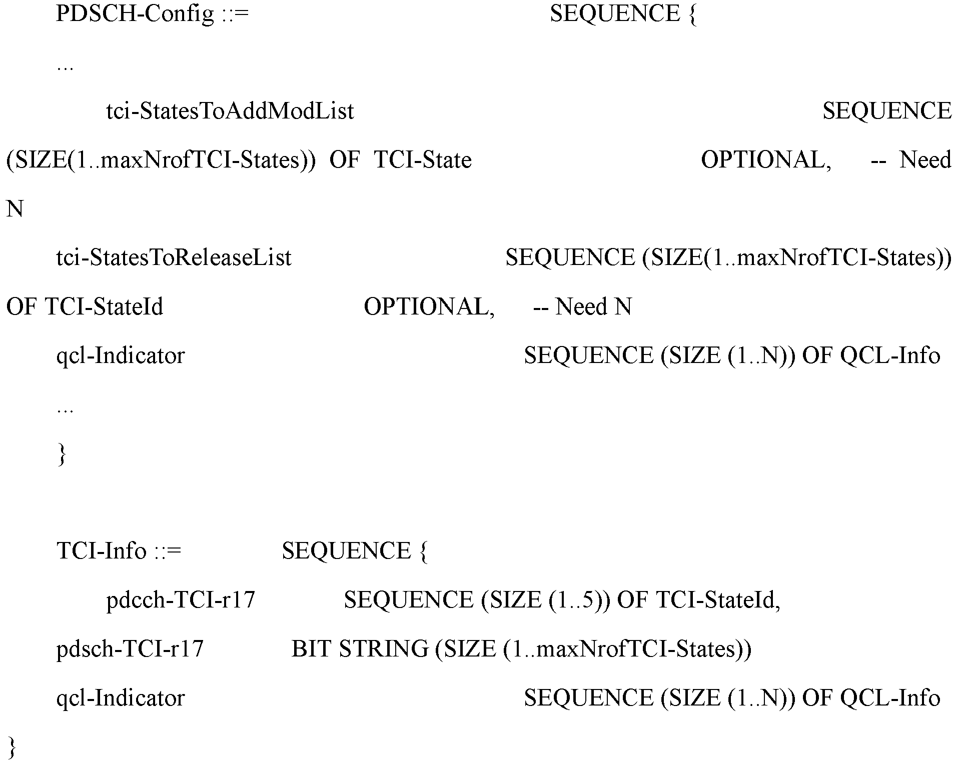

The above configuration indicates that the QCL indications are applicable to all TCI states. It is also feasible to configure multiple QCL-Infos under a TCI state, which is applicable to all QCL types, as shown in the following. Since each of qcl-Indicator and qcl-Type1/qcl-Type2 include QCL-Info, only the QCL type (typeA, typeB, typeC, typeD}) needs to be configured in qcl-Type1/qcl-Type2.

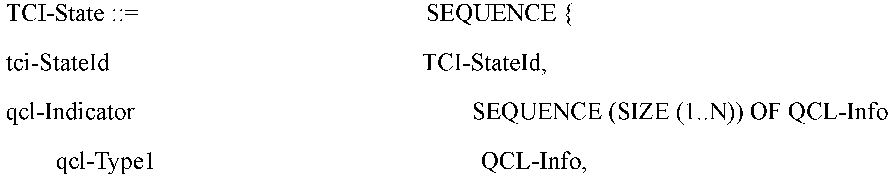

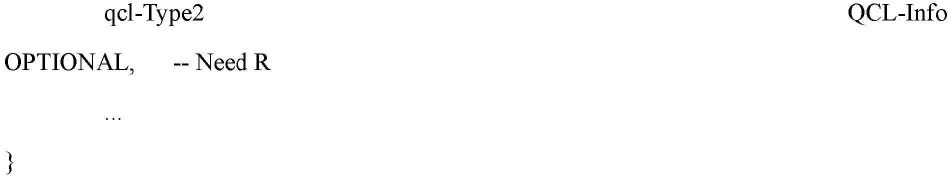

In the present disclosure, multiple QCL-Infos may be configured in other higher-layer parameter. In addition, the above signaling configuration is applicable to other embodiments or implementations.

In addition, qcl-Indicator or QCL-Info may also include QCL parameter indication index of other RS, for example:

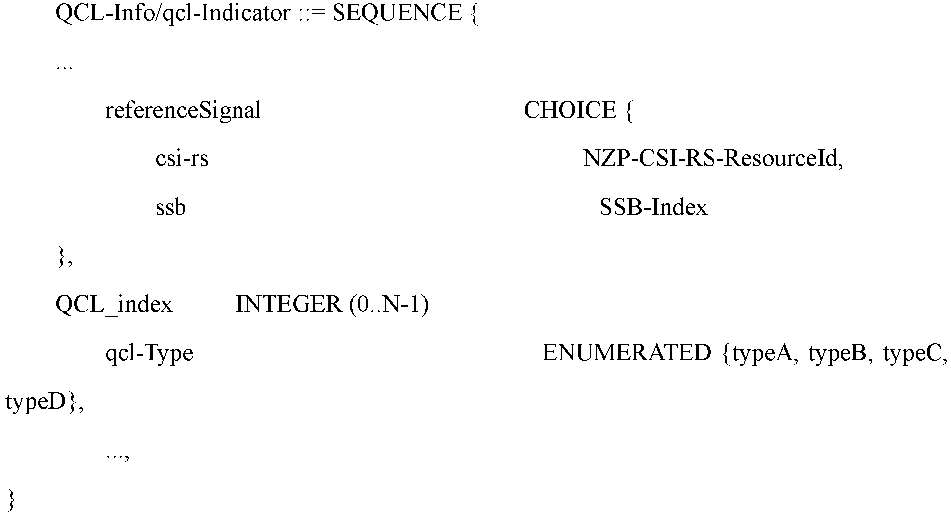

As a second optional implementation: QCL parameter indication is implemented in an information field (new information field) other than the TCI state field (multiple QCL characteristics of a source reference signal are indicated through QCL parameter indications);

For example, a new information field is used for QCL indication only, as shown in Table 6 to Table 8. Even through the indication is not performed by using the TCI field, the QCL indication needs to operate together with the TCI state indication, for example, the indicated TCI states and the indicated QCL indications are corresponding, e.g., the quantity of TCI states in the TCI combination indicated by the TCI field and the quantity of QCL indications indicated by the new information field (such as the first information field) are equal and they are in a one-to-one correspondence; or a correspondence between the QCL indications and the TCI state indications is established based on a predefined rule, for example, the QCL indications include 4 QCL indications, which respectively correspond to QCL_Type A indication of the first indicated TCI state, QCL_Type D indication of the first indicated TCI state, QCL_Type A indication of the second indicated TCI state, and QCL_Type D indication of the second indicated TCI state. In addition, the indicated QCL indications are QCL indications corresponding to the QCL parameters of the indicated TCI states.

In this implementation, a higher-layer parameter may be used to configure which TCI state or which QCL parameter type requires or does not require corresponding QCL indication(s). In a case that the corresponding QCL indication(s) are required, the corresponding QCL indication(s) are included in the DCI, otherwise, the corresponding QCL indication(s) are not included.

**Table 6**

| Codepoint | QCL indication |
|---|---|
| 00 | 0 |
| 01 | 1 |
| 10 | 1 |
| 11 | 2 |

**Table 7**

| Codepoint | QCL_TypeA indication | QCL_TypeD indication |
|---|---|---|
| 00 | 0 | 1 |
| 01 | 1 | 2 |
| 10 | 1 | 1 |
| 11 | 2 | 2 |

**Table 8**

| Codepoint | QCL indication 1 | QCL indication 2 | QCL indication 3 |
|---|---|---|---|
| 00 | 0 | 2 | 0 |
| 01 | 1 | - | - |
| 10 | 1 | - | - |
| 11 | 2 | 0 | - |

As a third optional implementation: TCI indication is implemented in a TCI state field (indication of multiple QCL characteristics of a source reference signal are indicated through TCI indications);

In addition to indicating multiple QCL characteristics of a source reference signal through QCL parameter indications, a similar function can be achieved using TCI indications. For example, multiple QCL parameters are configured for each TCI state through higher-layer signaling, for example, including 3 or 4 QCL parameters. Multiple QCL parameters corresponding to a same TCI state may be further associated with a same reference signal, for example, QCL2 and QCL3 from QCL1, QCL2 and QCL3 both correspond to CSI-RS2, however, since they are configured under different QCL parameters, respective pieces of large-scale parameter information representing the two may be different. Accordingly, in a case of dynamically indicating the TCI state, it is feasible to further indicate which one or several QCL parameters of the TCI state are effective, for example, the signaling indication is shown in Table 9. 0', '1', and '2' represent the first QCL parameter, the second QCL parameter, and the third QCL parameter of the TCI state, respectively. Similarly, each TCI state may correspond to one TCI indication. In this case, the TCI state configuration may include QCL parameters of the same QCL type, and the corresponding source reference signals are also the same. The indication process also needs to be associated with the beam measurement reporting process, so that the terminal can determine that each TCI indication or each QCL indication corresponds to a measurement result of the source reference signal in the beam measurement process, and then determine that the same source reference signal corresponds to different reception or transmission filters.

**Table 9**

| Codepoint | TCI state combination | TCI indication 1 | TCI indication 2 |
|---|---|---|---|
| 00 | TCI 3, TCI 8 | 0 | 1 |
| 01 | TCI 101 | 1 | 0,1 |
| 10 | TCI 57 | 1 | 1 |
| 11 | TCI 88, TCI 23 | 2 | 2 |

In addition, in a case that the RIS acts as a relay, beam information of the multi-hop channel needs to be indicated to the terminal. Therefore, it is needed to design a suitable beam indication scheme for the RIS system so that the terminal can obtain correct beam information.

Based on the above, in the method of the embodiments of the present disclosure, the indication from the network side device further includes: first information;
the first information is used to indicate one of the following:
multiple groups of TCI states, where each group of TCI states corresponds to one transmission time unit (which may also be described as a time unit) or one hop of link; optionally, every group of TCI states corresponds to a same TCI configuration or different TCI configurations; and
a first group of TCI states and an adjustment codebook corresponding to the first group of TCI states, where the adjustment codebook is used to determine a second group of TCI states based on the first group of TCI states, and each codeword is a codeword in a fixed codebook.

In the third specific embodiment of the present disclosure, it can be seen from FIG. 3 and FIG. 5 that the network side may use different RIS transmission patterns or slot/symbol formats to perform transmission for the terminal. In order for the terminal to obtain the appropriate TCI state indication, it is needed to design the TCI indication method for each slot/symbol or transmission.

One method is to use a multi-group TCI state indication manner. For example, a TCI state indication includes 2 groups of TCI states, each group includes a TCI state combination, i.e., including one or more TCI states. An indication method is shown in Table 10. Each group of TCI states may correspond to one hop of channel or correspond to one time unit. For example, in a case that the terminal receives a signal transmitted by the network side and forwarded by the RIS, the transmission performed by the network side to the RIS can be defined as one-hop transmission, and the transmission forwarded by the RIS to the UE can be defined as one-hop transmission, and each hop of transmission corresponds to a group of TCI states. For another example, one TCI indication indicates TCI states of 2 time units. The first group of TCI states corresponds to the first time unit, and the second group of TCI states corresponds to the second time unit. Each level of TCI states may correspond to a TCI combination, and different groups of TCI states may come from a same TCI state pool (that is, up to M TCI states configured through RRC signaling, which may be further activated using MAC-CE signaling) or from different TCI state pools. It may be combined with the first embodiment and the second embodiment, and the same source reference signals included in different TCI states may correspond to different large-scale parameters or different QCL characteristics.

Or, the network side does not indicate the second group of TCI states, but indicates the TCI states transmitted by the network side (i.e., the first group of TCI states) and the control matrix at the RIS, so that the terminal infers the second group of TCI states based on the first group of TCI states and the control matrix, for example, the signaling indication method in Table 11.

Different from the TCI state indication, the control matrix at the RIS can be absolute beam information, for example, a fixed codebook including N precoding codewords may be defined, from which a specific precoding codeword can be indicated for processing the signal transmitted by the network side. In the RIS control matrix indication, there is no need to define a source reference signal. In this way, the terminal can determine the second group of TCI states of the signal forwarded by the RIS based on the group of TCI states and the RIS control matrix indication indicated by the network side. It should be noted that the correspondence between the second group of TCI states and the control matrix may be trained by the terminal through beam measurement, or may be preconfigured for the terminal by the network side, which is not limited in the present disclosure.

**Table 10**

| Codepoint | First group of TCI states | Second group of TCI states |
|---|---|---|
| 00 | TCI 3, TCI 8 | TCI 13, TCI 81 |
| 01 | TCI 101 | TCI 11, TCI 23 |
| 10 | TCI 57 | TCI 51 |
| 11 | TCI 88, TCI 23 | TCI 24 |

**Table 11**

| Codepoint | First group of TCI states | RIS control matrix |
|---|---|---|
| 00 | TCI 3, TCI 8 | Indication 3 |
| 01 | TCI 101 | Indication 19 |
| 10 | TCI 57 | Indication 25 |
| 11 | TCI 88, TCI 23 | Indication 7 |

In this embodiment, the terminal determines the TCI states of the different time units or the different links based on the indication from the network side, which achieves the purpose of supporting the joint indication of the TCI states of the multi-hop channel.

As shown in FIG. 9, the embodiments of the present disclosure further provide a method for determining beam information, which includes the following steps.

Step 901: determining, by a network side device, multiple quasi co-location (QCL) parameter configurations of a reference signal, where the QCL parameter configurations are used to configure multiple QCL parameters of the reference signal.

Optionally, the network side device may determine the multiple QCL parameter configurations of the reference signal based on beam measurement results of the reference signal on at least two measurement time units, where the beam measurement result of each measurement resource corresponds to one QCL parameter of the reference signal. For example, when performing beam measurement, the network side configures multiple measurement time units to transmit the same reference signal set, and the QCL parameters of each reference signal may be the same or different. When the QCL parameters are the same, it means that they are used for the terminal to perform reception beam scanning, that is, training reception filters of the terminal; when the QCL parameters are different, it means that they are used for the network side to perform transmission beam scanning, and accordingly, the terminal may report a reference signal index corresponding to an optimal beam and a corresponding measurement value. The present disclosure does not limit how to configure the QCL parameters. Accordingly, a reference signal is transmitted in multiple measurement time units, and the terminal can determine multiple QCL parameters of the reference signal. The QCL parameters will be further used as QCL parameters of a channel or signal in subsequent transmission, that is, the terminal obtains the multiple QCL parameter configurations of the reference signal based on the measurement reporting.

The network side device may obtain the multiple quasi co-location QCL parameter configurations of the reference signal from the relay system or the RIS system. For example, the network side configures multiple QCL parameter configurations of one reference signal through RRC signaling and/or MAC-CE signaling, and each QCL parameter configuration may be quasi-co-located with other reference signal, or quasi-co-located with a QCL parameter of other reference signal. For example, CSI-RS 5 has a total of 3 QCL parameters, where the first QCL parameter and SSB 2 are quasi-co-located with respect to QCL-TypeA and QCL-TypeD, the second QCL parameter and CSI-RS 1 are quasi-co-located with respect to QCL-TypeD, and the third QCL parameter and SSB 8 are quasi-co-located with respect to QCL-TypeB. For another example, CSI-RS 11 has a total of 2 QCL parameters, where the first QCL parameter and a second QCL parameter of CSI-RS 5 are quasi-co-located, and the second QCL parameter and a first QCL parameter of SSB 7 are quasi-co-located. In the embodiments of the present disclosure, one QCL parameter configuration may include QCL parameter(s) of one type (such as QCL-TypeD parameter(s)) or may include a group of QCL parameters (such as QCL-TypeA and QCL-TypeD parameters), and the present disclosure does not impose any restrictions on this.

Step 902: indicating, by the network side device, at least one target QCL parameter from the multiple QCL parameters, to the terminal.

The target QCL parameter indicated by the network side device is determined based on an association relationship between the QCL parameters of the reference signal and pieces of transmission information.

In embodiments of the present disclosure, the network side device (such as a base station) indicates to the terminal the at least one target QCL parameter from the multiple QCL parameters. The at least one target QCL parameter is associated with the time unit, the scheduled transmission, the transmission channel, or the transmission signal. In this way, the same reference signal (or source reference signal) may have different QCL parameters for different time units, transmissions, channels, or signals, thereby enabling the terminal to select corresponding QCL parameters for different transmission paths in an RIS system or a relay system, that is, the method for determining beam information in the above can be effectively applied to the RIS system or the relay system.

Optionally, the indicating by the network side device the at least one target QCL parameter from the multiple QCL parameters to the terminal includes:
indicating, by the network side device, the at least one target QCL parameter from the multiple QCL parameters, to the terminal through QCL parameter indication information;
the QCL parameter indication information includes one or more QCL parameter indexes of one QCL parameter type, or includes QCL parameter indexes respectively corresponding to at least two QCL parameter types, and each QCL parameter index corresponds to one QCL parameter.

Optionally, the QCL parameter indication information is used to indicate QCL parameter information of at least one transmission configuration indicator (TCI) state of a codepoint.

Optionally, the method of the embodiments of the present disclosure further includes:
transmitting, by the network side device, the QCL parameter indication information through a TCI field or a QCL indication information field in DCI.

Optionally, the method of the embodiments of the present disclosure further includes:
transmitting, by the network side device, TCI indication information through a TCI field, where the TCI indication information is used to indicate a TCI state configured for the terminal and at least one QCL parameter index corresponding to the TCI state.

Optionally, in the method of the embodiments of the present disclosure, the QCL parameter index is associated with resource index information in a beam measurement report.

Optionally, in the method of the embodiments of the present disclosure, the resource index information satisfies at least one of:
different pieces of resource index information corresponds to different QCL parameters of the reference signal;
different pieces of resource index information corresponds to different transmission links of the reference signal; or,
different pieces of resource index information corresponds to different time units.

Optionally, the transmission link of the reference signal includes:
a transmission link between the terminal and the network side device;
a transmission link between the terminal and a first node, where the first node is configured to perform transmission with the terminal and/or the network side device; or,
a transmission link among the terminal, the network side device and the first node.

Optionally, the method further includes:
transmitting first information by the network side device, where the first information is used to indicate one of:
multiple groups of TCI states, where each group of TCI states corresponds to one transmission time unit or one hop of link; and
a first group of TCI states and an adjustment codebook corresponding to the first group of TCI states, where the adjustment codebook is used to determine a second group of TCI states based on the first group of TCI states.

Optionally, the determining by the network side device the multiple quasi co-location (QCL) parameter configurations of the reference signal includes:
obtaining, by the network side device, beam measurement results of multiple measurement resources of the reference signal on at least two measurement time units; and
determining, by the network side device, the multiple QCL parameter configurations of the reference signal based on the beam measurement results, where the beam measurement result of each measurement time unit corresponds to one QCL parameter of the reference signal.

It should be noted that the method embodiments on the network side device side are method embodiments corresponding to the method embodiments on the terminal side described above, the description of which will not be further provided herein.

As shown in FIG. 10, embodiments of the present disclosure further provide a device for determining beam information, which is applied to a terminal, including a memory 1020, a transceiver 1000, and a processor 1010.

The memory 1020 is configured to store a computer program, the transceiver 1000 is configured to transmit and receive data under control of the processor 1010, and the processor 1010 is configured to read the computer program in the memory 1020 to perform following operations:
obtaining multiple quasi co-location (QCL) parameter configurations of a reference signal, where the QCL parameter configurations are used to configure multiple QCL parameters of the reference signal; and
determining at least one target QCL parameter from the multiple QCL parameters of the reference signal based on a predefined rule or an indication from a network side device;
the predefined rule or the indication from the network side device is determined based on an association relationship between the QCL parameters of the reference signal and pieces of transmission information, and the transmission information includes at least one of a transmission time unit, a scheduled transmission, a transmission channel and a transmission signal.

As an optional implementation, the multiple quasi co-location QCL parameter configurations of the reference signal are obtained via the transceiver. For example, multiple QCL parameter configurations of the reference signal configured by the relay system or the RIS system are obtained via the transceiver. As another optional implementation, the processor determines the multiple QCL parameter configurations of the reference signal based on beam measurement results of the reference signal on at least two measurement time units, where the beam measurement result of each measurement resource corresponds to one QCL parameter of the reference signal.

Optionally, the processor is configured to execute the program to further perform following step:
determining the at least one target QCL parameter corresponding to at least one piece of target transmission information from the multiple QCL parameters of the reference signal based on a correspondence between the QCL parameters of the reference signal and the pieces of transmission information;
the target transmission information includes transmission information associated with a first transmission, the first transmission includes a transmission between the terminal and the network side device and/or a first node, and the first node is configured to perform transmission with the terminal and/or the network side device.

Optionally, the transmission time unit of the transmission information is determined based on a resource transmission pattern or a slot format configured by a network side.

Optionally, each QCL parameter of the reference signal corresponds to one piece of resource index information in a beam measurement report.

Optionally, the processor is configured to execute the program to further perform following step:
determining the at least one target QCL parameter from the multiple QCL parameters of the reference signal based on QCL parameter indication information from the network side device, where the QCL parameter indication information includes one or more QCL parameter indexes of one QCL parameter type, or includes QCL parameter indexes respectively corresponding to at least two QCL parameter types, and each QCL parameter index corresponds to one QCL parameter.

Optionally, the QCL parameter indication information is used to indicate QCL parameter information of at least one transmission configuration indicator (TCI) state of a codepoint.

Optionally, the processor is configured to execute the program to further perform following step:
obtaining, via the transceiver, the QCL parameter indication information through a TCI field or a QCL indication information field in downlink control information (DCI).

Optionally, the processor is configured to execute the program to further perform following step:
obtaining, via the transceiver, TCI indication information through a TCI field, where the TCI indication information is used to indicate a TCI state configured for the terminal and at least one QCL parameter index corresponding to the TCI state.

Optionally, the QCL parameter index is associated with resource index information in a beam measurement report.

Optionally, the resource index information satisfies at least one of:
different pieces of resource index information corresponds to different QCL parameters of the reference signal;
different pieces of resource index information corresponds to different transmission links of the reference signal; or,
different pieces of resource index information corresponds to different time units.

Optionally, the transmission link of the reference signal includes:
a transmission link between the terminal and the network side device;
a transmission link between the terminal and a first node, where the first node is configured to perform transmission with the terminal and/or the network side device; or,
a transmission link among the terminal, the network side device and the first node.

Optionally, the processor is configured to execute the program to further perform following step:
performing, via the transceiver, beam measurement reporting in a predefined reporting manner based on measurement resources of the reference signal on at least two measurement time units;
the predefined reporting manner includes at least one of:
   reporting a beam measurement result corresponding to a first target measurement resource based on target values of multiple measurement resources of the reference signal on each measurement time unit, where the target values are obtained based on sums of values of target parameters corresponding to the multiple measurement resources, where the target parameter includes at least one of layer 1 reference signal received power (L1-RSRP) and layer 1 signal to interference plus noise ratio (L1-SINR), the target value corresponding to the first target measurement resource is in the top N positions of a target sorting result, where the target sorting result is obtained by sorting the target values of the multiple measurement resources on the measurement time units in an descending order;
   reporting a beam measurement result corresponding to a second target measurement resource, where a target parameter of the second target measurement resource on each measurement time unit is greater than a preset threshold; or,
   reporting a beam measurement result corresponding to a third target measurement resource, where the at least two measurement time units include at least one reference measurement time unit, and the third target measurement resource is a measurement resource corresponding to the reference measurement time unit.

Optionally, the indication from the network side device further includes: first information;
the first information is used to indicate one of the following:
multiple groups of TCI states, where each group of TCI states corresponds to one transmission time unit or one hop of link; and
a first group of TCI states and an adjustment codebook corresponding to the first group of TCI states, where the adjustment codebook is used to determine a second group of TCI states based on the first group of TCI states.

In FIG. 10, a bus architecture may include any quantity of interconnected buses and bridges. Various circuits including one or more processors represented by the processor 1010 and a memory represented by the memory 1020 are linked. The bus architecture may further link various other circuits together, such as a periphery component, a voltage stabilizer and a power management circuit, which are known in the art and are not further described herein. A bus interface provides an interface. The transceiver 1000 may be multiple elements, i.e., including a transmitter and a receiver, providing a unit for communicating with various other devices on transmission media. The transmission media include a wireless channel, a wired channel, an optical cable, or other transmission media. For different user equipments, the user interface 1030 may be an interface capable of connecting externally and internally with the required equipment. The connected equipment includes but not limited to a keypad, a display, a speaker, a microphone, a joystick, etc.

The processor 1010 is in charge of managing the bus architecture and common processes. The memory 1020 may store data used by the processor 1010 in performing operations.

Optionally, the processor 1010 may be a Central Processing Unit (Central Processing Unit, CPU), an Application Specific Integrated Circuit (Application Specific Integrated Circuit, ASIC), a Field-Programmable Gate Array (Field-Programmable Gate Array, FPGA), or a Complex Programmable Logic Device (Complex Programmable Logic Device, CPLD), or the processor may adopt a multi-core architecture.

The processor is configured to execute any of the methods in the embodiments of the present application according to obtained executable instructions by calling the computer program stored in the memory. The processor and the memory may be physically arranged separately.

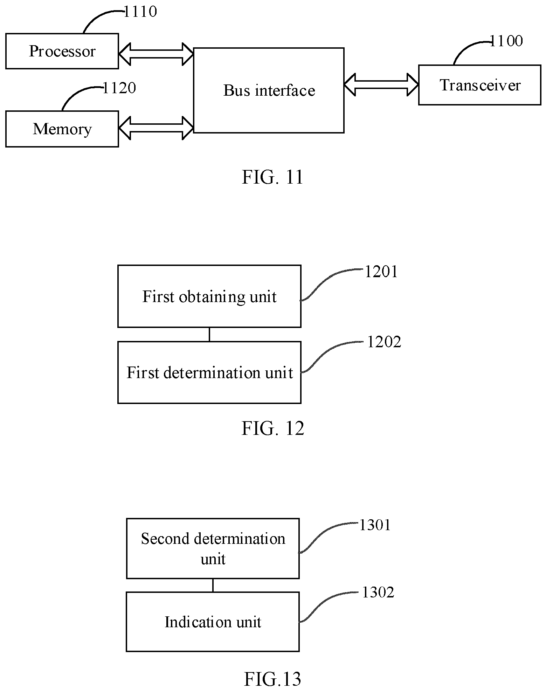

As shown in FIG. 11, embodiments of the present disclosure further provide a device for determining beam information, which is applied to a network side device, including a memory 1120, a transceiver 1100, and a processor 1110.

The memory 1120 is configured to store a computer program, the transceiver 1100 is configured to transmit and receive data under control of the processor 1110, and the processor 1110 is configured to read the computer program in the memory 1120 to perform following operations:
determining multiple quasi co-location (QCL) parameter configurations of a reference signal, where the QCL parameter configurations are used to configure multiple QCL parameters of the reference signal; and
indicating at least one target QCL parameter from the multiple QCL parameters, to the terminal;
the target QCL parameter is determined based on an association relationship between the QCL parameters of the reference signal and pieces of transmission information.

Optionally, the processor is configured to execute the program to further perform following step:
indicating the at least one target QCL parameter from the multiple QCL parameters, to the terminal via the transceiver through QCL parameter indication information;
the QCL parameter indication information includes one or more QCL parameter indexes of one QCL parameter type, or includes QCL parameter indexes respectively corresponding to at least two QCL parameter types, and each QCL parameter index corresponds to one QCL parameter.

Optionally, the QCL parameter indication information is used to indicate QCL parameter information of at least one transmission configuration indicator (TCI) state of a codepoint.

Optionally, the processor is configured to execute the program to further perform following step:
transmitting, via the transceiver, the QCL parameter indication information through a TCI field or a QCL indication information field in DCI.

Optionally, the processor is configured to execute the program to further perform following step:
transmitting, via the transceiver, TCI indication information through a TCI field, where the TCI indication information is used to indicate a TCI state configured for the terminal and at least one QCL parameter index corresponding to the TCI state.

Optionally, the QCL parameter index is associated with resource index information in a beam measurement report.

Optionally, the resource index information satisfies at least one of:
different pieces of resource index information corresponds to different QCL parameters of the reference signal;
different pieces of resource index information corresponds to different transmission links of the reference signal; or,
different pieces of resource index information corresponds to different time units.

Optionally, the transmission link of the reference signal includes:
a transmission link between the terminal and the network side device;
a transmission link between the terminal and a first node, where the first node is configured to perform transmission with the terminal and/or the network side device; or,
a transmission link among the terminal, the network side device and the first node.

Optionally, the processor is configured to execute the program to further perform following step:
transmitting first information via the transceiver, where the first information is used to indicate one of:
multiple groups of TCI states, where each group of TCI states corresponds to one transmission time unit or one hop of link; and
a first group of TCI states and an adjustment codebook corresponding to the first group of TCI states, where the adjustment codebook is used to determine a second group of TCI states based on the first group of TCI states.

Optionally, the processor is configured to execute the program to further perform following step:
obtaining, via the transceiver, beam measurement results of multiple measurement resources of the reference signal on at least two measurement time units; and
determining the multiple QCL parameter configurations of the reference signal based on the beam measurement results, where the beam measurement result of each measurement resource corresponds to one QCL parameter of the reference signal.

In FIG. 11, a bus architecture may include any quantity of interconnected buses and bridges. Various circuits including one or more processors represented by the processor 1110 and a memory represented by the memory 1120 are linked. The bus architecture may further link various other circuits together, such as a periphery component, a voltage stabilizer and a power management circuit, which are known in the art and are not further described herein. A bus interface provides an interface. The transceiver 1100 may be multiple elements, i.e., including a transmitter and a receiver, providing a unit for communicating with various other devices on transmission media. The transmission media include a wireless channel, a wired channel, an optical cable, or other transmission media. The processor 1110 is in charge of managing the bus architecture and common processes. The memory 1120 may store data used by the processor 1110 in performing operations.

The processor 1110 may be a Central Processing Unit (Central Processing Unit, CPU), an Application Specific Integrated Circuit (Application Specific Integrated Circuit, ASIC), a Field-Programmable Gate Array (Field-Programmable Gate Array, FPGA), or a Complex Programmable Logic Device (Complex Programmable Logic Device, CPLD), or the processor may adopt a multi-core architecture.

It should be noted that the device according to the embodiments of the present disclosure can implement all the method steps performed in the above method embodiments for determining beam information, and the same technical effects can be realized. The same parts of the present embodiments as the method embodiments, and the beneficial effects, are not further provided herein.

As shown in FIG. 12, the embodiments of the present disclosure further provide a device for determining beam information, which is applied to a terminal, including:
a first obtaining unit 1201, configured to obtain multiple quasi co-location (QCL) parameter configurations of a reference signal, where the QCL parameter configurations are used to configure multiple QCL parameters of the reference signal; and
a first determination unit 1202, configured to determine at least one target QCL parameter from the multiple QCL parameters of the reference signal based on a predefined rule or an indication from a network side device;
the predefined rule or the indication from the network side device is determined based on an association relationship between the QCL parameters of the reference signal and pieces of transmission information, and the transmission information includes at least one of a transmission time unit, a scheduled transmission, a transmission channel and a transmission signal.

Optionally, the first determination unit is configured to determine the at least one target QCL parameter corresponding to at least one piece of target transmission information from the multiple QCL parameters of the reference signal based on a correspondence between the QCL parameters of the reference signal and the pieces of transmission information;
the target transmission information includes transmission information associated with a first transmission, the first transmission includes a transmission between the terminal and the network side device and/or a first node, and the first node is configured to perform transmission with the terminal and/or the network side device.

Optionally, the transmission time unit of the transmission information is determined based on a resource transmission pattern or a slot format configured by a network side.

Optionally, each QCL parameter of the reference signal corresponds to one piece of resource index information in a beam measurement report.

Optionally, the first determination unit is configured to determine the at least one target QCL parameter from the multiple QCL parameters of the reference signal based on QCL parameter indication information from the network side device, where the QCL parameter indication information includes one or more QCL parameter indexes of one QCL parameter type, or includes QCL parameter indexes respectively corresponding to at least two QCL parameter types, and each QCL parameter index corresponds to one QCL parameter.

Optionally, the QCL parameter indication information is used to indicate QCL parameter information of at least one transmission configuration indicator (TCI) state of a codepoint.

Optionally, the device of the embodiments of the present disclosure further includes:
a second obtaining unit, configured to obtain the QCL parameter indication information through a TCI field or a QCL indication information field in downlink control information (DCI).

Optionally, the device of the embodiments of the present disclosure further includes:
a third obtaining unit, configured to obtain TCI indication information through a TCI field, where the TCI indication information is used to indicate a TCI state configured for the terminal and at least one QCL parameter index corresponding to the TCI state.

Optionally, the QCL parameter index is associated with resource index information in a beam measurement report.

Optionally, the resource index information satisfies at least one of:
different pieces of resource index information corresponds to different QCL parameters of the reference signal;
different pieces of resource index information corresponds to different transmission links of the reference signal; or,
different pieces of resource index information corresponds to different time units.

Optionally, the transmission link of the reference signal includes:
a transmission link between the terminal and the network side device;
a transmission link between the terminal and a first node, where the first node is configured to perform transmission with the terminal and/or the network side device; or,
a transmission link among the terminal, the network side device and the first node.

Optionally, the device of the embodiments of the present disclosure further includes:
a reporting unit, configured to perform beam measurement reporting in a predefined reporting manner based on measurement resources of the reference signal on at least two measurement time units;
the predefined reporting manner includes at least one of:
   reporting a beam measurement result corresponding to a first target measurement resource based on target values of multiple measurement resources of the reference signal on each measurement time unit, where the target values are obtained based on sums of values of target parameters corresponding to the multiple measurement resources, where the target parameter includes at least one of layer 1 reference signal received power (L1-RSRP) and layer 1 signal to interference plus noise ratio (L1-SINR), the target value corresponding to the first target measurement resource is in the top N positions of a target sorting result, where the target sorting result is obtained by sorting the target values of the multiple measurement resources on the measurement time units in an descending order;
   reporting a beam measurement result corresponding to a second target measurement resource, where a target parameter of the second target measurement resource on each measurement time unit is greater than a preset threshold; or,
   reporting a beam measurement result corresponding to a third target measurement resource, where the at least two measurement time units include at least one reference measurement time unit, and the third target measurement resource is a measurement resource corresponding to the reference measurement time unit.

Optionally, in the device of the embodiments of the present disclosure, the indication from the network side device further includes: first information;
the first information is used to indicate one of the following:
multiple groups of TCI states, where each group of TCI states corresponds to one transmission time unit or one hop of link; and
a first group of TCI states and an adjustment codebook corresponding to the first group of TCI states, where the adjustment codebook is used to determine a second group of TCI states based on the first group of TCI states.

It should be noted that the device according to the embodiments of the present disclosure can implement all the method steps performed in the above method embodiments for determining beam information on the terminal side, and the same technical effects can be realized. The same parts of the present embodiments as the method embodiments, and the beneficial effects, are not further provided herein.

As shown in FIG. 13, the embodiments of the present disclosure further provide a device for determining beam information, which is applied to a network side device, including:
a second determination unit 1301, configured to determine multiple quasi co-location (QCL) parameter configurations of a reference signal, where the QCL parameter configurations are used to configure multiple QCL parameters of the reference signal; and
an indication unit 1302, configured to indicate at least one target QCL parameter from the multiple QCL parameters to the terminal;
the target QCL parameter indicated by the network side device is determined based on an association relationship between the QCL parameters of the reference signal and pieces of transmission information.

Optionally, the indication unit is configured to indicate the at least one target QCL parameter from the multiple QCL parameters, to the terminal through QCL parameter indication information;
the QCL parameter indication information includes one or more QCL parameter indexes of one QCL parameter type, or includes QCL parameter indexes respectively corresponding to at least two QCL parameter types, and each QCL parameter index corresponds to one QCL parameter.

Optionally, the QCL parameter indication information is used to indicate QCL parameter information of at least one transmission configuration indicator (TCI) state of a codepoint.

Optionally, the device of the embodiments of the present disclosure further includes:
a first transmission unit, configured to transmit the QCL parameter indication information through a TCI field or a QCL indication information field in DCI.

Optionally, the device of the embodiments of the present disclosure further includes:
a second transmission unit, configured to transmit TCI indication information through a TCI field, where the TCI indication information is used to indicate a TCI state configured for the terminal and at least one QCL parameter index corresponding to the TCI state.

Optionally, the QCL parameter index is associated with resource index information in a beam measurement report.

Optionally, the resource index information satisfies at least one of:
different pieces of resource index information corresponds to different QCL parameters of the reference signal;
different pieces of resource index information corresponds to different transmission links of the reference signal; or,
different pieces of resource index information corresponds to different time units.

Optionally, the transmission link of the reference signal includes:
a transmission link between the terminal and the network side device;
a transmission link between the terminal and a first node, where the first node is configured to perform transmission with the terminal and/or the network side device; or,
a transmission link among the terminal, the network side device and the first node.

Optionally, the device of the embodiments of the present disclosure further includes:
a third transmission unit, configured to transmit first information, where the first information is used to indicate one of the following:
multiple groups of TCI states, where each group of TCI states corresponds to one transmission time unit or one hop of link; and
a first group of TCI states and an adjustment codebook corresponding to the first group of TCI states, where the adjustment codebook is used to determine a second group of TCI states based on the first group of TCI states.

Optionally, in the device of the embodiments of the present disclosure, the fifth obtaining unit includes:
a first obtaining subunit, configured to obtain beam measurement results of multiple measurement resources of the reference signal on at least two measurement time units; and
a first determination subunit, configured to determine the multiple QCL parameter configurations of the reference signal based on the beam measurement results, where the beam measurement result of each measurement resource corresponds to one QCL parameter of the reference signal.

It should be noted that the device according to the embodiments of the present disclosure can implement all the method steps performed in the above method embodiments for determining beam information on the side of the network side device, and the same technical effects can be realized. The same parts of the present embodiments as the method embodiments, and the beneficial effects, are not further provided herein.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the conventional technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

In some embodiments of the present disclosure, a processor readable storage medium is further provided, the processor readable storage medium is configured to store program instructions, and the program instructions are used to cause a processor to execute the following steps:
obtaining multiple quasi co-location (QCL) parameter configurations of a reference signal, where the QCL parameter configurations are used to configure multiple QCL parameters of the reference signal; and
determining, via the terminal, at least one target QCL parameter from the multiple QCL parameters of the reference signal based on a predefined rule or an indication from a network side device;
the predefined rule or the indication from the network side device is determined based on an association relationship between the QCL parameters of the reference signal and pieces of transmission information, and the transmission information includes at least one of a transmission time unit, a scheduled transmission, a transmission channel and a transmission signal; or,
determining multiple quasi co-location (QCL) parameter configurations of a reference signal, where the QCL parameter configurations are used to configure multiple QCL parameters of the reference signal; and
indicating at least one target QCL parameter from the multiple QCL parameters, to the terminal;
where the target QCL parameter is determined based on an association relationship between the QCL parameters of the reference signal and pieces of transmission information, and the transmission information includes at least one of a transmission time unit, a scheduled transmission, a transmission channel and a transmission signal.

The terminal involved in the embodiments of the present disclosure may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

The network device involved in the embodiments of the present application may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of the present application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB), a relay node (relay node), a femto (femto), a pico (pico), etc., which is not limited in the embodiments of the present application. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2-dimension MIMO (2D-MIMO), 3-dimension MIMO (3D-MIMO), full dimension MIMO (FD-MIMO), or massive MIMO (massive-MIMO), or may be diversity transmission, or precoding transmission, or beamforming transmission, etc.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

A person skilled in the art should understand that the embodiments of the present disclosure may be provided as methods, systems, or computer program products. Therefore, the present disclosure may adopt the form of complete hardware embodiments, complete software embodiments, or embodiments combining software and hardware aspects. Moreover, the present disclosure may adopt the form of a computer program product implemented on one or more computer available storage media (including but not limited to a disk storage, an optical storage, etc.) containing computer available program code.

The present disclosure is described with reference to flowcharts and/or block diagrams of methods, devices (systems), and computer program products according to the embodiments of the present disclosure. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

Apparently, those skilled in the art may make various modifications and variations to the present disclosure, without departing from the spirit and scope of the present disclosure. In this case, if the modifications and variations of the present disclosure fall within the scope of the claims of the present disclosure and their equivalent techniques, the present disclosure is intended to include these modifications and variations.

## Claims

1. A method for determining beam information, comprising:
obtaining, by a terminal, a plurality of quasi co-location (QCL) parameter configurations of a reference signal, wherein the QCL parameter configurations are used to configure a plurality of QCL parameters of the reference signal; and
determining, by the terminal, at least one target QCL parameter from the plurality of QCL parameters of the reference signal based on a predefined rule or an indication from a network side device;
wherein the predefined rule or the indication from the network side device is determined based on an association relationship between the QCL parameters of the reference signal and pieces of transmission information, and the transmission information comprises at least one of a transmission time unit, a scheduled transmission, a transmission channel and a transmission signal.

2. The method according to claim 1, wherein the determining, by the terminal, the at least one target QCL parameter from the plurality of QCL parameters of the reference signal based on the predefined rule comprises:
determining, by the terminal, the at least one target QCL parameter corresponding to at least one piece of target transmission information from the plurality of QCL parameters of the reference signal based on a correspondence between the QCL parameters of the reference signal and the pieces of transmission information;
wherein the target transmission information comprises transmission information associated with a first transmission, the first transmission comprises a transmission between the terminal and the network side device and/or a first node, and the first node is configured to perform transmission with the terminal and/or the network side device.

3. The method according to claim 1 or claim 2, wherein the transmission time unit of the transmission information is determined based on a resource transmission pattern or a slot format configured by a network side.

4. The method according to claim 1 or claim 2, wherein each QCL parameter of the reference signal corresponds to one piece of resource index information in a beam measurement report.

5. The method according to claim 1, wherein the determining, by the terminal, the at least one target QCL parameter from the plurality of QCL parameters of the reference signal based on the indication from the network side device comprises:
determining, by the terminal, the at least one target QCL parameter from the plurality of QCL parameters of the reference signal based on QCL parameter indication information from the network side device, wherein the QCL parameter indication information comprises one or more QCL parameter indexes of one QCL parameter type, or comprises QCL parameter indexes respectively corresponding to at least two QCL parameter types, and each QCL parameter index corresponds to one QCL parameter.

6. The method according to claim 5, wherein the QCL parameter indication information is used to indicate QCL parameter information of at least one transmission configuration indicator (TCI) state of a codepoint.

7. The method according to claim 5 or claim 6, further comprising:
obtaining, by the terminal, the QCL parameter indication information through a TCI field or a QCL indication information field in downlink control information (DCI).

8. The method according to claim 5, further comprising:
obtaining, by the terminal, TCI indication information through a TCI field, wherein the TCI indication information is used to indicate a TCI state configured for the terminal and at least one QCL parameter index corresponding to the TCI state.

9. The method according to claim 4, wherein the resource index information satisfies at least one of:
different pieces of resource index information corresponds to different QCL parameters of the reference signal;
different pieces of resource index information corresponds to different transmission links of the reference signal; or,
different pieces of resource index information corresponds to different time units.

10. The method according to claim 9, wherein the transmission link of the reference signal comprises:
a transmission link between the terminal and the network side device;
a transmission link between the terminal and a first node, wherein the first node is configured to perform transmission with the terminal and/or the network side device; or,
a transmission link among the terminal, the network side device and the first node.

11. The method according to claim 4, further comprising:
performing, by the terminal, beam measurement reporting in a predefined reporting manner based on measurement resources of the reference signal on at least two measurement time units;
wherein the predefined reporting manner comprises at least one of:
reporting a beam measurement result corresponding to a first target measurement resource based on target values of a plurality of measurement resources of the reference signal on each measurement time unit, wherein the target values are obtained based on sums of values of target parameters corresponding to the plurality of measurement resources, wherein the target parameter comprises at least one of layer 1 reference signal received power (L1-RSRP) and layer 1 signal to interference plus noise ratio (L1-SINR), the target value corresponding to the first target measurement resource is in the top N positions of a target sorting result, wherein the target sorting result is obtained by sorting the target values of the plurality of measurement resources on the measurement time units in an descending order;
reporting a beam measurement result corresponding to a second target measurement resource, wherein a target parameter of the second target measurement resource on each measurement time unit is greater than a preset threshold; or,
reporting a beam measurement result corresponding to a third target measurement resource, wherein the at least two measurement time units comprise at least one reference measurement time unit, and the third target measurement resource is a measurement resource corresponding to the reference measurement time unit.

12. The method according to claim 1, wherein the indication from the network side device is further used to indicate one of:
a plurality of groups of TCI states, wherein each group of TCI states corresponds to one transmission time unit or one hop of link; and
a first group of TCI states and an adjustment codebook corresponding to the first group of TCI states, wherein the adjustment codebook is used to determine a second group of TCI states based on the first group of TCI states.

13. A method for determining beam information, comprising:
determining, by a network side device, a plurality of quasi co-location (QCL) parameter configurations of a reference signal, wherein the QCL parameter configurations are used to configure a plurality of QCL parameters of the reference signal; and
indicating, by the network side device, at least one target QCL parameter from the plurality of QCL parameters, to the terminal;
wherein the target QCL parameter indicated by the network side device is determined based on an association relationship between the QCL parameters of the reference signal and pieces of transmission information, and the transmission information comprises at least one of a transmission time unit, a scheduled transmission, a transmission channel and a transmission signal.

14. The method according to claim 13, wherein the indicating by the network side device the at least one target QCL parameter from the plurality of QCL parameters to the terminal comprises:
indicating, by the network side device, the at least one target QCL parameter from the plurality of QCL parameters, to the terminal through QCL parameter indication information;
wherein the QCL parameter indication information comprises one or more QCL parameter indexes of one QCL parameter type, or comprises QCL parameter indexes respectively corresponding to at least two QCL parameter types, and each QCL parameter index corresponds to one QCL parameter.

15. The method according to claim 14, wherein the QCL parameter indication information is used to indicate QCL parameter information of at least one transmission configuration indicator (TCI) state of a codepoint.

16. The method according to claim 14 or 15, further comprising:
transmitting, by the network side device, the QCL parameter indication information through a TCI field or a QCL indication information field in DCI.

17. The method according to claim 14, further comprising:
transmitting, by the network side device, TCI indication information through a TCI field, wherein the TCI indication information is used to indicate a TCI state configured for the terminal and at least one QCL parameter index corresponding to the TCI state.

18. The method according to claim 14, wherein the QCL parameter index is associated with resource index information in a beam measurement report.

19. The method according to claim 18, wherein the resource index information satisfies at least one of:
different pieces of resource index information corresponds to different QCL parameters of the reference signal;
different pieces of resource index information corresponds to different transmission links of the reference signal; or,
different pieces of resource index information corresponds to different time units.

20. The method according to claim 19, wherein the transmission link of the reference signal comprises:
a transmission link between the terminal and the network side device;
a transmission link between the terminal and a first node, wherein the first node is configured to perform transmission with the terminal and/or the network side device; or,
a transmission link among the terminal, the network side device and the first node.

21. The method according to claim 13, wherein the determining by the network side device the plurality of quasi co-location (QCL) parameter configurations of the reference signal comprises:
obtaining, by the network side device, beam measurement results of the reference signal on at least two measurement time units; and
determining, by the network side device, the plurality of QCL parameter configurations of the reference signal based on the beam measurement results, wherein the beam measurement result of each measurement time unit corresponds to one QCL parameter of the reference signal.

22. The method according to claim 13, further comprising:
transmitting first information by the network side device, wherein the first information is used to indicate one of:
a plurality of groups of TCI states, wherein each group of TCI states corresponds to one transmission time unit or one hop of link; and
a first group of TCI states and an adjustment codebook corresponding to the first group of TCI states, wherein the adjustment codebook is used to determine a second group of TCI states based on the first group of TCI states.

23. A device for determining beam information, applied to a terminal, comprising a memory, a transceiver, and a processor;
wherein the memory is configured to store a computer program, the transceiver is configured to transmit and receive data under control of the processor, and the processor is configured to read the computer program in the memory to perform following operations:
obtaining a plurality of quasi co-location (QCL) parameter configurations of a reference signal, wherein the QCL parameter configurations are used to configure a plurality of QCL parameters of the reference signal; and
determining at least one target QCL parameter from the plurality of QCL parameters of the reference signal based on a predefined rule or an indication from a network side device;
wherein the predefined rule or the indication from the network side device is determined based on an association relationship between the QCL parameters of the reference signal and pieces of transmission information, and the transmission information comprises at least one of a transmission time unit, a scheduled transmission, a transmission channel and a transmission signal.

24. The device according to claim 23, wherein the processor is configured to execute the program to further perform following step:
determining, via the terminal, the at least one target QCL parameter corresponding to at least one piece of target transmission information from the plurality of QCL parameters of the reference signal based on a correspondence between the QCL parameters of the reference signal and the pieces of transmission information;
wherein the target transmission information comprises transmission information associated with a first transmission, the first transmission comprises a transmission between the terminal and the network side device and/or a first node, and the first node is configured to perform transmission with the terminal and/or the network side device.

25. The device according to claim 24, wherein the transmission time unit of the transmission information is determined based on a resource transmission pattern or a slot format configured by a network side.

26. The device according to claim 23, wherein the processor is configured to execute the program to further perform following step:
determining the at least one target QCL parameter from the plurality of QCL parameters of the reference signal based on QCL parameter indication information from the network side device, wherein the QCL parameter indication information comprises one or more QCL parameter indexes of one QCL parameter type, or comprises QCL parameter indexes respectively corresponding to at least two QCL parameter types, and each QCL parameter index corresponds to one QCL parameter.

27. The device according to claim 26, wherein the QCL parameter indication information is used to indicate QCL parameter information of at least one transmission configuration indicator (TCI) state of a codepoint.

28. A device for determining beam information, applied to a network side device, comprising a memory, a transceiver, and a processor;
wherein the memory is configured to store a computer program, the transceiver is configured to transmit and receive data under control of the processor, and the processor is configured to read the computer program in the memory to perform following operations:
determining a plurality of quasi co-location (QCL) parameter configurations of a reference signal, wherein the QCL parameter configurations are used to configure a plurality of QCL parameters of the reference signal; and
indicating at least one target QCL parameter from the plurality of QCL parameters, to the terminal;
wherein the target QCL parameter is determined based on an association relationship between the QCL parameters of the reference signal and pieces of transmission information, and the transmission information comprises at least one of a transmission time unit, a scheduled transmission, a transmission channel and a transmission signal.

29. The device according to claim 28, wherein the processor is configured to execute the program to further perform following step:
indicating the at least one target QCL parameter from the plurality of QCL parameters, to the terminal via the transceiver through QCL parameter indication information;
wherein the QCL parameter indication information comprises one or more QCL parameter indexes of one QCL parameter type, or comprises QCL parameter indexes respectively corresponding to at least two QCL parameter types, and each QCL parameter index corresponds to one QCL parameter.

30. The device according to claim 29, wherein the QCL parameter indication information is used to indicate QCL parameter information of at least one transmission configuration indicator (TCI) state of a codepoint.

31. A device for determining beam information, applied to a terminal, comprising:
a fifth obtaining unit, configured to obtain a plurality of quasi co-location (QCL) parameter configurations of a reference signal, wherein the QCL parameter configurations are used to configure a plurality of QCL parameters of the reference signal; and
a first determination unit, configured to determine at least one target QCL parameter from the plurality of QCL parameters of the reference signal based on a predefined rule or an indication from a network side device;
wherein the predefined rule or the indication from the network side device is determined based on an association relationship between the QCL parameters of the reference signal and pieces of transmission information, and the transmission information comprises at least one of a transmission time unit, a scheduled transmission, a transmission channel and a transmission signal.

32. A device for determining beam information, applied to a network side device, comprising:
a second determination unit, configured to determine a plurality of quasi co-location (QCL) parameter configurations of a reference signal, wherein the QCL parameter configurations are used to configure a plurality of QCL parameters of the reference signal; and
an indication unit, configured to indicate at least one target QCL parameter from the plurality of QCL parameters to the terminal,
wherein the target QCL parameter is determined based on an association relationship between the QCL parameters of the reference signal and pieces of transmission information.

33. A processor readable storage medium, having program indications stored thereon, wherein the program indications are used to cause a processor to perform the steps of the method for determining beam information according to any one of claims 1 to 12, or to perform the steps of the method for determining beam information according to any one of claims 13 to 22.
